(19) Europäisches Patentamt
European Patent Office
Office européen des brevets

(11) **EP 2 484 084 B1**

(12) **FASCICULE DE BREVET EUROPEEN**

(45) Date de publication et mention
de la délivrance du brevet:
**27.03.2019 Bulletin 2019/13**

(21) Numéro de dépôt: **10773652.2**

(22) Date de dépôt: **28.09.2010**

(51) Int Cl.:
*H04L 29/06* *(2006.01)*     *H04L 9/08* *(2006.01)*
*H04L 9/32* *(2006.01)*     *H04L 9/28* *(2006.01)*

(86) Numéro de dépôt international:
**PCT/FR2010/052028**

(87) Numéro de publication internationale:
**WO 2011/039460 (07.04.2011 Gazette 2011/14)**

(54) **PROCÉDÉ ET DISPOSITIFS DE COMMUNICATIONS SECURISÉES CONTRE LES ATTAQUES PAR INNONDATION ET DENIS DE SERVICE (DOS) DANS UN RÉSEAU DE TÉLÉCOMMUNICATIONS**

VERFAHREN UND GERÄTE ZUR SICHEREN KOMMUNIKATION VOR DENIAL-OF-SERVICE- ODER FLOODING-ATTACKEN IN EINEM TELEKOMMUNIKATIONSNETZWERK

METHOD AND DEVICES ALLOWING COMMUNICATION SECURE AGAINST DENIAL OF SERVICES (DOS) AND AGAINST FLOODING ATTACKS IN A TELECOMMUNICATIONS NETWORK

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **30.09.2009 FR 0956821**
**23.12.2009 FR 0959458**

(43) Date de publication de la demande:
**08.08.2012 Bulletin 2012/32**

(73) Titulaire: **Orange**
**75015 Paris (FR)**

(72) Inventeurs:
• **BATTISTELLO, Patrick**
  **F-22700 Perros Guirec (FR)**
• **GILBERT, Henri**
  **F-91440 Bures Sur Yvette (FR)**

(56) Documents cités:
WO-A1-2007/062672     WO-A1-2008/091517
WO-A1-2010/133783     US-A1- 2005 027 985
US-B1- 7 024 692

• **PATRICK BATTISTELLO: "Inter-domain and DoS-resistant call establishment protocol (IDDR-CEP)", PRINCIPLES, SYSTEMS AND APPLICATIONS OF IP TELECOMMUNICATIONS ON, IPTCOMM '10, no. 31, 2 août 2010 (2010-08-02), - 3 août 2010 (2010-08-03), page 22, XP55016414, Munich DOI: 10.1145/1941530.1941534 ISBN: 978-1-45-030631-7**
• **PATRICK BATTISTELLO ET AL: "Analysis of Token and Ticket Based Mechanisms for Current VoIP Security Issues and Enhancement Proposal", 31 mai 2010 (2010-05-31), COMMUNICATIONS AND MULTIMEDIA SECURITY, SPRINGER BERLIN HEIDELBERG, BERLIN, HEIDELBERG, PAGE(S) 154 - 165, XP019142824, ISBN: 978-3-642-13240-7 alinéa [0003] - alinéa [0004]**
• **CHUN-CHING ANDY HUANG: "USING IDENTITY-BASED PRIVACY-PROTECTED ACCESS CONTROL FILTER (IPACF) TO AGAINST DENIAL OF SERVICE ATTACKS AND PROTECT USER PRIVACY", THESIS SUBMITTED TO THE GRADUATE FACULTY OF AUBURN UNIVERSITY, US, 7 août 2007 (2007-08-07), pages 1-75, XP007916788,**

• RICHAR KUHN, THOMAS WALSH, STEFFEN FRIES: "Security Considerations for Voice Over IP Systems Recommendations of the National Institute of Standards and Technology", NIST SPECIAL PUBLICATION 800-58,, no. Special Publication 800-58, 1 janvier 2005 (2005-01-01), pages 1-99, XP007920080,

**Description**

La présente invention concerne la sécurisation des communications dans un réseau de télécommunications.

Les réseaux de télécommunications, comme l'Internet, transmettent des données entre différentes entités réseau, telles qu'un serveur web ou un serveur de messagerie électronique, via une infrastructure commune. L'invention peut s'appliquer par exemple à l'accès sécurisé d'une entité réseau à une plateforme de service.

L'invention peut également s'appliquer, par exemple, à la transmission d'un "message original" d'une entité réseau à une ou plusieurs autre(s) entité(s) réseau ; par "message original", on entend ici un ensemble quelconque d'informations, par exemple un courrier électronique, ou une demande d'initiation d'appel VoIP (initiales des mots anglais *"Voice over Internet Protocol"* signifiant "Voix sur IP"), ou encore un "message instantané". On dira de manière générale qu'un message original est envoyé par un "client expéditeur" rattaché à un domaine "expéditeur" et connecté à un domaine "émetteur", vers un "client destinataire" rattaché à un domaine "destinataire" et connecté à un domaine "récepteur" (dans le cadre de la présente invention, on dira qu'une entité est "rattachée" à un domaine réseau lorsque cette entité possède un lien de service et/ou logique et/ou administratif avec ce domaine ; dans le cas du courrier électronique, l'adresse logique correspond à l'adresse "email"). Le domaine émetteur peut ou non être distinct du domaine expéditeur, et le domaine récepteur peut ou non être distinct du domaine destinataire ; cette distinction entre domaines est utile, par exemple, lorsqu'un domaine émetteur relaie vers un client destinataire un message émis par un client expéditeur itinérant qui est connecté à ce domaine émetteur mais qui n'est pas rattaché au domaine émetteur.

Comme il est bien connu, les réseaux de télécommunications subissent des attaques à destination de cibles professionnelles, administratives ou individuelles. Une attaque courante de nos jours consiste à envoyer vers le plus grand nombre de destinataires possible des messages indésirables qu'ils n'ont pas sollicités, tels que des "*Spam*" pour des courriers électroniques ou des "*Spit*" pour des appels téléphoniques sur Internet. Le qualificatif "indésirable" est pris au sens large et s'applique à la fois à l'identité de l'expéditeur du message, qui peut être authentique ou falsifiée, et au contenu du message.

La possibilité d'attaques du type *Spam/Spit* repose notamment sur les facteurs suivants :

- la faiblesse des protocoles utilisés sur Internet, tels que le protocole SMTP ("*Simple Mail Transfer Protocol*" en anglais) le plus utilisé pour le transfert de courrier électronique et qui n'incorpore notamment pas de fonctions d'authentification de l'émetteur d'un courrier ;

- l'augmentation de la puissance des ordinateurs qui peuvent envoyer des messages indésirables en masse de façon automatique sur une période très courte ; et

- l'augmentation du nombre de réseaux ayant accès à *Internet* et de la connectivité entre ces réseaux, ce qui présente un très grand nombre de cibles à des attaquants qui peuvent s'abriter derrière des réseaux relativement permissifs ou hors de portée légale ou administrative des réseaux cibles.

De plus, il n'est pas aisé, pour un domaine émetteur du type "émetteur.fr", de déterminer si une adresse du type user@expéditeur.fr fournie par un client expéditeur itinérant connecté à ce domaine émetteur est valide, c'est-à-dire si l'adresse de ce client est effectivement attribuée dans le domaine "expéditeur.fr" et si ce client dispose des droits pour envoyer un message depuis cette adresse : en effet, le domaine émetteur ne gère pas les identités, c'est-à-dire les adresses logiques du type "expéditeur.fr". Cette difficulté de contrôle est souvent utilisée par des attaquants pour émettre des messages sous une fausse identité depuis un domaine auquel les attaquants ont accès, ou bien via une machine corrompue située dans un domaine légitime. Par exemple, un domaine Internet "domaine.fr" créé par un attaquant peut tout-à-fait être utilisé pour émettre des appels VoIP avec une identité d'appelant +332abcdefgh@domain.fr, alors qu'en fait le numéro d'abonné "+332abcdefgh" est attribué, disons, au domaine "orange.fr". Face à ce genre d'attaque, le fait d'ajouter une signature numérique par le domaine appelant (cf. document RFC 4474 de l'IETF) est inefficace, car, si cela garantit au destinataire que l'appel provient bien de "domain.fr", cela ne lui garantit pas que le numéro appelant est effectivement enregistré dans ce domaine.

Une solution à cette difficulté de contrôle consiste à bloquer dans le domaine émetteur l'envoi de tout message dont l'adresse d'origine n'est pas rattachée au domaine émetteur, mais cette solution est trop limitative, notamment pour la mobilité des services de VoIP qui permettent à un terminal itinérant d'utiliser un relais tiers tel qu'un domaine émetteur pour établir un appel téléphonique. Cette situation pose le problème de trouver des moyens permettant à un domaine destinataire de s'assurer que des contrôles suffisants ont été réalisés au niveau du domaine émetteur du message.

Dans le cadre de la présente invention, on appellera "transaction" l'ensemble des échanges protocolaires permettant l'établissement d'un secret partagé, ou "clé primaire de session", entre deux entités réseau *A* et *B* pour la durée d'une session. La transaction correspond à la phase d'initialisation de la session, cette session pouvant durer beaucoup plus longtemps que la transaction. Dans certaines parties de la description, les termes transaction et session pourront être considérés comme équivalents. Dans un souci de simplification, la clé primaire de session sera également notée "clé de session" entre $A$ et $B$, indépendamment des opérations de dérivation ou de diversification qui peuvent lui être appliquées. Cette clé de session peut par exemple servir à la dérivation d'autres clés secrètes pour mettre en place une connexion sécurisée (TLS, IPSec, ou autre) entre les entités $A$ et $B$. Comme autre exemple, cette clé de session peut permettre de garantir la confidentialité ou l'intégrité d'un message original envoyé par l'entité $A$ (client expéditeur) à l'entité $B$ (client destinataire) ; à chaque nouveau message original envoyé depuis un client expéditeur vers un ou plusieurs client(s) destinataire(s) correspond une nouvelle transaction ; à l'inverse, la répétition d'une étape protocolaire, par exemple du fait d'un problème réseau, n'est pas considérée comme une nouvelle transaction.

Une entité réseau peut évidemment, en principe, authentifier une autre entité réseau au moyen d'une infrastructure à clé publique PKI ("*Public Key Infrastructure*" en anglais). Mais comme il est bien connu, les infrastructures PKI sont lourdes à mettre en place et à utiliser.

En variante, certains procédés, tels que l'algorithme de Diffie-Hellman, prévoient la détermination commune d'une clé de session par deux entités préalablement à tout échange de messages originaux entre elles. Mais un tel algorithme ne donne, en lui-même, à une entité $A$ aucune garantie sur l'identité d'une entité $B$ avec laquelle elle établit ainsi une clé de session.

En variante, dans les réseaux comprenant un faible nombre d'usagers, tels que les réseaux de pairs, on peut prévoir une installation "manuelle" (par exemple par visite sur place) d'une clé secrète partagée pour chaque paire d'entités intéressées. Mais une telle installation ne convient pas aux réseaux comprenant un grand nombre d'usagers.

Une solution bien adaptée aux réseaux comprenant un grand nombre d'usagers consiste à mettre en place un tiers de confiance, communément appelé "Centre de Distribution de Clés". Chaque entité réseau $A$ souhaitant faire appel à ce service de communications sécurisées s'abonne auprès du Centre de Distribution de Clés, et obtient en conséquence, pour une durée prédéterminée ou pour une transaction prédéterminée, une clé secrète $K_{SA}$ partagée entre $A$ et un Serveur d'Autorisation $S$ associé au Centre de Distribution de Clés. Avantageusement, les abonnés à ce service n'ont pas à stocker de secrets ou de certificats concernant les autres abonnés, la sécurisation des communications se faisant transaction par transaction avec la participation du Centre de Distribution de Clés. De plus, le Centre de Distribution de Clés peut selon les besoins transmettre de manière sécurisée des clés secrètes à des entités de support (stockage, passerelles, et ainsi de suite) placées sous son contrôle, ou à des entités légales pour l'interception de certaines communications. Comme le Centre de Distribution de Clés est le dépositaire de toutes les clés secrètes des abonnés, il est évidemment indispensable qu'il soit puissamment protégé contre les intrusions hostiles, mais cela ne représente pas de difficulté particulière.

On connaît par exemple, sous le nom de "Kerberos" (cf. document RFC 4120 de l'IETF), un tel procédé de communications sécurisées entre deux entités $A$ et $B$ abonnées au service. Ce procédé Kerberos comprend essentiellement les étapes suivantes :

1) une entité $A$ s'identifie et s'authentifie comme le détenteur d'un identifiant $ID_A$ auprès d'un Serveur d'Autorisation $S$ (après s'être adressée à un Serveur d'Authentification distinct du Serveur d'Autorisation $S$); le Serveur d'Autorisation $S$ détermine la clé secrète $K_{SA}$ qu'il partage avec cette entité $A$ ;

2) l'entité $A$ déclare au Serveur d'Autorisation $S$ son intention de communiquer avec une certaine entité $B$ ; le Serveur d'Autorisation $S$ détermine la clé secrète $K_{SB}$ qu'il partage avec cette entité $B$ ;

3) le Serveur d'Autorisation $S$ engendre une clé de session $K_{AB}$, et l'envoie à l'entité $A$ sous forme chiffrée au moyen de ladite clé secrète $K_{SA}$ ;

4) le Serveur d'Autorisation $S$ engendre également un "ticket" $T$ comprenant au moins ledit identifiant $ID_A$ de l'entité $A$ et ladite clé de session $K_{AB}$ ; le Serveur d'Autorisation $S$ envoie à l'entité $A$ une donnée $CHECK_A$ résultant du chiffrement dudit ticket $T$ au moyen de ladite clé secrète $K_{SB}$ ;

5) l'entité $A$ déchiffre la clé de session $K_{AB}$ au moyen de sa clé secrète $K_{SA}$, et envoie à l'entité $B$, d'une part, la donnée $CHECK_A$ (telle que reçue précédemment par l'entité $A$ de la part du Serveur d'Autorisation $S$), et d'autre part une donnée $\delta_A$ résultant du chiffrement, avec la clé de session $K_{AB}$, d'un ensemble d'éléments comprenant au moins son identifiant $ID_A$ ; et

6) l'entité $B$ déchiffre le ticket $T$ au moyen de sa clé secrète $K_{SB}$ ; la clé de session $K_{AB}$ lui permet ensuite de déchiffrer l'identifiant $ID_A$ de l'entité $A$ ; l'entité $B$ vérifie que cet identifiant est bien le même que celui contenu dans le ticket $T$ ; si l'entité $B$ approuve la transaction, elle en informe l'entité $A$.

L'entité $A$ peut alors compléter la transaction avec l'entité $B$. Par exemple, si l'entité $B$ est un fournisseur de services, l'entité $A$ pourra faire la demande d'un service particulier et l'obtenir, en échangeant avec l'entité $B$ des données chiffrées au moyen de la clé de session $K_{AB}$. Comme autre exemple, si l'entité $B$ attend un document de la part de l'entité $A$, cette dernière pourra envoyer à l'entité $B$ un message original accompagné du code "MAC" de ce message original obtenu au moyen de la clé de session $K_{AB}$ (on rappelle à cet égard que, de manière classique, un code d'authentification de message, appelé en anglais "*Message Authentication Code*", ou "MAC", est une valeur courte -- généralement quelques dizaines de bits -- déduite des données contenues dans un message et d'une clé secrète partagée entre l'émetteur et le récepteur du message à l'aide d'un algorithme cryptographique ; en envoyant un message accompagné de son code d'authentification, l'émetteur permet au récepteur de vérifier que ces données n'émanent pas d'une autre entité et n'ont pas été altérées entre leur émission et leur réception).

Le procédé Kerberos prévoit donc la transmission de la clé de session, d'une part, directement à l'entité *A,* et d'autre part indirectement (en passant par l'entité *A*) à l'entité *B* ; l'entité *B* n'a donc pas besoin de communiquer avec le Serveur d'Autorisation *S* pour obtenir cette clé de session. Le procédé Kerberos permet en outre avantageusement à l'entité *B* de vérifier l'identité de l'entité *A* ; cette vérification empêche une attaque de type "*phishing*", dans laquelle un attaquant s'identifierait d'abord sous sa véritable identité auprès du Serveur d'Autorisation *S,* afin d'obtenir une autorisation de transaction de la part ce dernier, puis sous une identité usurpée auprès de l'entité *B* (par exemple en se faisant passer pour la banque de l'entité *B* afin d'obtenir des informations bancaires confidentielles).

Le procédé Kerberos présente toutefois l'inconvénient que l'entité *B* est sensible aux attaques par inondation. Retournons en effet à l'étape n° 6 ci-dessus : l'entité *B* doit, avant de pouvoir identifier une attaque, réaliser deux déchiffrements plus une vérification d'égalité. Or les déchiffrements sont des opérations lourdes en termes de calcul, de sorte qu'un attaquant peut submerger l'entité *B* en lui envoyant de manière répétée des données $CHECK_A$ et $\delta_A$ arbitraires. Pire, un attaquant pourrait envoyer à l'entité *B* des données $CHECK_A$ et $\delta_A$ que l'attaquant a préalablement lues ou interceptées lors d'une transaction initiée par une entité *A* légitime (attaques par rejeu) : dans ce cas, l'attaquant inonde non seulement l'entité *B*, mais également cette entité *A* légitime qui reçoit de manière répétée des messages de confirmation de la part de l'entité *B* ; en fait, la "Version 5" du procédé Kerberos protège les entités *A* légitimes des attaques par inondation en préconisant l'insertion d'un horodatage dans la donnée $\delta_A$, mais cela alourdit encore la tâche de l'entité *B* qui doit vérifier que les données $\delta_A$ successives qu'elle reçoit d'une certaine entité *A* présentent toutes un horodatage différent, ce qui ne fait qu'aggraver l'inondation de l'entité *B*.

La demande US 20050027985 concerne un système téléphonique, un appareil et des procédés sécurisés de protocole Internet. Les communications sur un système de téléphonie IP peuvent être sécurisées en sécurisant les communications vers, et depuis, un adaptateur de téléphonie par câble (CTA). Les dispositifs sécurisés, tels que le CTA, peuvent communiquer avec d'autres dispositifs sécurisés en établissant des canaux supports et de signalisation chiffrés avec des clés symétriques spécifiques à la session, et dérivées d'une clé symétrique distribuée par un contrôleur de signalisation.

La thèse de C-C.A. Huang intitulée "Using Identity-Based Privacy-Protected Access Control Filter" (Auburn University, 2007) divulgue un protocole, appelé IPACF, destiné à lutter contre les attaques par déni de service (DoS) et par déni de service distribué (DDoS), Ce protocole constitue un perfectionnement du protocole "*Identity-Based Dynamic Access Control Filter*" (IDF).

Le brevet US 7,024,692 concerne un procédé et un système dans lesquels une pluralité de clients peuvent se connecter à un certain domaine conformément au procédé Kerberos. Ce brevet enseigne un mécanisme de message asynchrone au moyen duquel un client non-authentifié peut finaliser son opération d'ouverture de session initiale sans avoir à attendre que l'opération d'ouverture de session avec authentification d'un autre client soit finalisée.

L'article de D.R. Kuhn et al. intitulé "Security Considérations for Voice over IP Systems" (NIST, 2005) contient des recommandations pour la mise en place de réseaux de Voix sur IP (VoIP) sécurisés par des agences gouvernementales.

La demande WO 200891517 concerne une architecture de gestion de clés de transfert intercellulaire, qui utilise le procédé Kerberos pour la distribution de clés sécurisée entre un serveur, un authentificateur et un noeud mobile. Cette architecture permet à un noeud mobile d'obtenir les clés de session nécessaires pour établir dynamiquement des associations de sécurité avec un ensemble d'authentificateurs sans communiquer avec eux avant son changement de cellule.

La demande WO 2007062672 divulgue un procédé de contrôle d'accès mis en oeuvre dans un réseau de communication comprenant au moins une entité d'authentification apte à authentifier un demandeur d'accès au réseau afin de lui accorder un accès conditionnel au réseau de communication, ladite authentification mettant en oeuvre un procédé de cryptographie à clé publique. Ledit procédé de contrôle d'accès permet de fournir automatiquement au demandeur d'accès au réseau des références d'accès pour accéder à un service en ligne offert par un fournisseur de service en ligne accessible via le réseau de communication.

La présente invention concerne donc un procédé de communications sécurisées dans un réseau de télécommunications, dans lequel une transaction entre une entité *A* et une entité *B* dudit réseau comprend les étapes suivantes :

a) l'entité *A* envoie à un Serveur d'Autorisation *S* une requête d'autorisation dans laquelle l'entité *A* s'identifie et s'authentifie comme le détenteur d'un identifiant $ID_A$ ;
b) l'entité *A* déclare au Serveur d'Autorisation *S* son intention de communiquer avec une certaine entité *B* ; le Serveur d'Autorisation *S* détermine une clé secrète $K_{SB}$ qu'il partage avec cette entité *B* ; et
c) le Serveur d'Autorisation *S* engendre une clé de session $K_{AB,N}$ et l'envoie à l'entité *A*.

Ledit procédé est remarquable en ce que ladite clé de session $K_{AB,N}$ est une fonction à sens unique de ladite clé secrète $K_{SB}$ et est également fonction d'un entier *N*, appelé numéro de transaction, affecté à ladite transaction, et en ce qu'il comprend en outre les étapes suivantes :

d) le Serveur d'Autorisation *S* engendre également un identifiant de transaction $IDTR_N$, qui est une fonction dépendant au moins dudit numéro de transaction *N* de manière non-inversible ;

e) le Serveur d'Autorisation *S* fait parvenir à l'entité *B* des éléments comprenant au moins ledit identifiant de transaction $IDTR_N$ ; et

f) l'entité *B* vérifie au moins que la valeur de l'identifiant de transaction $IDTR_N$ reçue lors de l'étape e) ci-dessus figure au sein d'un ensemble de valeurs précalculées par l'entité *B* et correspondant à au moins une valeur prévue du numéro de transaction ; si c'est le cas, l'entité *B* en déduit d'abord la valeur courante du numéro de transaction *N*, et ensuite la valeur de la clé de session $K_{AB,N}$.

Il est clair que l'étape b) n'est pas nécessairement postérieure à l'étape a). De même, l'étape d) n'est pas nécessairement postérieure à l'étape c).

On notera que l'évaluation de l'authenticité de l'entité *A* peut être effectuée par tout moyen d'authentification connu. De plus, elle peut être réalisée en s'adressant préalablement à un Serveur d'Authentification distinct du Serveur d'Autorisation *S* (de manière analogue au procédé Kerberos).

On notera également qu'en pratique, et pour des besoins de séparation cryptographique, ce n'est pas nécessairement la clé (primaire) de session $K_{AB,N}$ qui sera utilisée pour le chiffrement des échanges entre les entités *A* et *B*, mais, le cas échéant, une ou plusieurs clé(s) dérivée(s) de $K_{AB,N}$. Dans un souci de simplification, les clés dérivées d'une clé primaire ne seront pas systématiquement explicitées dans le présent document, mais une opération de dérivation ou de diversification selon l'état de l'art sera implicite dès lors qu'un même secret partagé sert à mettre en oeuvre une pluralité de fonctions cryptographiques.

Selon la présente invention donc, le Serveur d'Autorisation *S* fournit, pour chaque nouvelle transaction repérée par son numéro *N*, la clé de session $K_{AB,N}$ à l'entité *A*, mais pas à l'entité *B*. Contrairement au procédé Kerberos, l'entité *B* selon l'invention possède des moyens pour calculer elle-même cette clé de session à partir de la clé secrète $K_{SB}$ qu'elle partage avec le Serveur d'Autorisation *S*, et du numéro de transaction courant *N*, que l'entité *B* détermine après réception de l'identifiant de transaction $IDTR_N$.

Grâce à l'invention, on peut bénéficier des avantages, mentionnés ci-dessus, des procédés de communications sécurisées du type "Centre de Distribution de Clés". Notamment, on impose une vérification de toute entité abonnée au service de communications sécurisées avant qu'elle ne s'adresse à une autre entité abonnée, afin d'offrir des garanties de sécurité à cette autre entité.

De plus, l'invention supprime avantageusement l'inconvénient du procédé Kerberos, mentionné ci-dessus, concernant la sensibilité de l'entité *B* aux attaques par inondation.

En effet, selon la présente invention, l'entité *B* reçoit, lors de l'étape e) ci-dessus, l'identifiant de transaction $IDTR_N$ de la part du Serveur d'Autorisation *S*, soit directement, soit via une autre entité, qui peut avantageusement être l'entité *A* (cf. les modes de réalisation décrits en détail ci-dessous). En outre, l'entité *B* calcule la valeur de l'identifiant de transaction $IDTR_N$ pour au moins une valeur *N* du numéro de transaction, cette valeur étant prévue pour faire suite à une valeur utilisée dans une transaction précédente. Vu les risques de désordre pouvant se produire à l'arrivée lorsque plusieurs transactions ont été initiées sur une courte période par une ou plusieurs entité(s) *A* pour la même entité *B*, il est en fait préférable que l'entité *B* précalcule la valeur de l'identifiant de transaction $IDTR_N$ pour une séquence prédéterminée de plusieurs valeurs de l'entier *N*, et que, après réception d'un certain identifiant de transaction $IDTR_N$, elle identifie par scrutation dans cet ensemble de valeurs de $IDTR_N$ à quel numéro de transaction *N* correspond l'identifiant de transaction reçu. On rappelle à cet égard que la valeur de $IDTR_N$ est une fonction dépendant au moins de l'entier *N* de manière non-inversible, de sorte qu'il n'est pas possible de calculer la valeur de l'entier *N* à partir de la valeur de $IDTR_N$ en inversant cette fonction, ni de calculer l'une quelconque des valeurs $IDTR_{N+i}$ ($i > 0$) en connaissant toute ou partie des valeurs précédentes $IDTR_{N-j}$ ($j \geq 0$).

Grâce à ces dispositions, l'entité *B* détecte facilement une attaque (c'est-à-dire en peu d'opérations de calcul) lorsqu'elle constate qu'une valeur reçue et censée représenter un identifiant de transaction $IDTR_N$ valide ne figure pas au sein dudit ensemble de valeurs précalculées (comme expliqué ci-dessous, un attaquant a une chance infime de deviner une valeur de numéro de transaction *N* acceptable à un moment donné par une entité *B* donnée, de sorte que cet attaquant ne peut pas calculer une valeur de $IDTR_N$ acceptable, même si la façon dont l'identifiant de transaction $IDTR_N$ dépend de *N* est rendue publique). On protège ainsi les entités abonnées au service de communications sécurisées contre les attaques par inondation.

Un avantage supplémentaire de l'invention par rapport au procédé Kerberos se situe dans la taille (en nombre de bits) des messages protocolaires. En effet, selon le procédé Kerberos, l'entité *A* envoie à l'entité *B* la donnée $CHECK_A$ calculée par chiffrement du ticket *T* ; or ce ticket *T* est quant à lui nécessairement de grande taille puisqu'il comprend, notamment, la clé de session $K_{AB}$. Cette grande taille peut poser des problèmes dans le cas de certaines architectures utilisant un mode de transport non-connecté (par exemple, celles utilisant le protocole de signalisation SIP) dans lesquelles la taille nominale des messages de signalisation empêche parfois l'insertion de données de grande taille.

En revanche, selon la présente invention, l'entité *A* n'a avantageusement pas à envoyer la clé de session $K_{AB,N}$ à l'entité *B*.

Par ailleurs, la transmission (directe ou indirecte) de l'identifiant de transaction $IDTR_N$ du Serveur d'Autorisation *S* à l'entité *B* lors de l'étape e) ci-dessus ne requiert pas non plus de message(s) de grande taille, car l'identifiant de transaction $IDTR_N$ peut être une fonction de taille modeste (de manière caractéristique, quelques octets) tout en offrant une bonne sécurité sur le plan cryptographique.

Lorsque la confidentialité des échanges entre le Serveur d'Autorisation *S* et l'entité *A* n'est pas assurée par le protocole de transport sous-jacent, le Serveur d'Autorisation *S* envoie à l'entité *A,* lors de l'étape c) ci-dessus, ladite clé de session $K_{AB,N}$ de préférence sous une forme confidentielle *OP* calculée au moyen d'une clé secrète $K_{SA}$ partagée entre le serveur d'Autorisation *S* et l'entité *A* (ou au moyen d'une clé dérivée de cette clé secrète $K_{SA}$). Dans ce cas, l'entité *A* utilise naturellement sa clé secrète $K_{SA}$ pour obtenir la clé de session $K_{AB,N}$.

Selon des caractéristiques particulières, ladite requête d'autorisation, envoyée par l'entité *A* à l'entité *S*, comprend un identifiant de requête $IDREQ_M$, qui est une fonction dépendant au moins, de manière non-inversible, d'un entier *M*, appelé numéro d'autorisation, affecté à cette requête d'autorisation.

Grâce à ces dispositions, on protège aussi le Serveur d'Autorisation S contre les attaques par inondation. En effet, le Serveur d'Autorisation S détecte facilement une attaque (c'est-à-dire en peu d'opérations de calcul) lorsqu'il constate qu'une valeur reçue et censée être un identifiant de requête $IDREQ_M$ ne correspond pas à une des valeurs du numéro d'autorisation *M* faisant suite, selon une séquence prédéterminée associée à l'entité A, aux numéros d'autorisation précédemment utilisés.

Selon des caractéristiques encore plus particulières, lors de l'étape c) ci-dessus, le Serveur d'Autorisation S envoie en outre à l'entité *A* un identifiant d'autorisation $IDAUT_M$, qui est une fonction dépendant au moins, de manière non-inversible, dudit numéro d'autorisation *M*.

Grâce à ces dispositions, on protège aussi l'entité *A* contre les attaques par inondation. En effet, l'entité *A* détecte facilement une attaque (c'est-à-dire en peu d'opérations de calcul) lorsqu'elle constate qu'une valeur reçue et censée représenter un identifiant d'autorisation $IDAUT_M$ valide ne correspond pas à une valeur acceptable du numéro d'autorisation *M* (c'est-à-dire, une valeur de *M* affectée à une requête d'autorisation précédemment envoyée par l'entité *A* au Serveur d'Autorisation *S*).

Selon d'autres caractéristiques particulières, tout ou partie desdits éléments envoyés à l'entité *B* lors l'étape e) ci-dessus sont protégés en intégrité.

Grâce à ces dispositions, on protège ces éléments contre toute altération ; or une telle altération ferait échouer la transaction dans la plupart des cas. Cette protection en intégrité peut notamment être réalisée au moyen d'un code MAC.

Selon des caractéristiques encore plus particulières, cette protection en intégrité est réalisée au moyen de ladite clé de session $K_{AB,N}$ ou d'une clé dérivée de cette clé de session $K_{AB,N}$.

Grâce à ces dispositions, l'entité *B* pourra s'assurer que l'entité qui lui a envoyé des éléments comprenant un identifiant de transaction $IDTR_N$ valide dispose bien de la clé de session $K_{AB,N}$ associée à la transaction courante. Ces dispositions permettent également d'adresser les identifiants de transaction $IDTR_N$ à l'entité *B* en clair par mesure de simplicité.

Selon encore d'autres caractéristiques particulières, lesdits éléments que le Serveur d'Autorisation *S* fait parvenir à l'entité *B* lors de l'étape e) ci-dessus comprennent également une donnée $CHECK_{A,N}$ dépendant du numéro de transaction *N* et déduite, au moyen d'une fonction cryptographique dépendant d'une clé secrète $K_{SB,check}$ dérivée de ladite clé secrète $K_{SB}$, d'un ensemble d'éléments tirés de ladite requête d'autorisation, et, optionnellement, du numéro de transaction *N*.

On notera que, pour ce faire, on peut envisager (au moins) deux variantes. Selon une première variante, les variables auxquelles est appliquée ladite fonction cryptographique ne comprennent que des éléments tirés de ladite requête d'autorisation : dans ce cas, il est nécessaire que la clé secrète $K_{SB,check}$, que l'on notera alors $K_{SB,N}$, soit une fonction à sens unique du numéro de transaction *N* (et de la clé secrète $K_{SB}$). Selon une deuxième variante, le numéro de transaction *N* est effectivement inclus dans les variables auxquelles est appliquée ladite fonction cryptographique : dans ce cas, ladite clé secrète $K_{SB,check}$ ne dépend pas nécessairement de *N*, et doit seulement être une fonction à sens unique de la clé secrète $K_{SB}$.

Grâce à ces dispositions, le Serveur d'Autorisation *S* peut prouver à l'entité *B* qu'il a bien autorisé la transaction et lui indiquer les informations sur lesquelles il s'est appuyé pour le faire.

Selon encore d'autres caractéristiques particulières, l'entité *A* fait parvenir à l'entité *B* ledit identifiant $ID_A$ de l'entité *A,* ou un identifiant dérivé $ID'_A$ utilisé par exemple pour des besoins d'anonymat.

Grâce à ces dispositions, l'entité *B* est informée de l'identité de l'entité A qui a initié avec elle la transaction de numéro *N*.

Selon des caractéristiques encore plus particulières :

- ledit ensemble d'éléments dont est déduite ladite donnée $CHECK_{A,N}$ comprend l'identifiant $ID_A$ de l'entité *A* ou ledit identifiant dérivé $ID'_A$, et
- lors de ladite étape f), l'entité *B* vérifie, au moyen de ladite clé secrète $K_{SB,N}$, la cohérence entre, d'une part, la donnée $CHECK_{A,N}$ reçue (directement ou indirectement) du Serveur d'Autorisation *S* comme décrit succinctement ci-dessus, et d'autre part lesdits éléments comprenant l'identifiant $ID_A$ ou l'identifiant dérivé $ID'_A$ reçus de l'entité *A* comme décrit succinctement ci-dessus.

Grâce à ces dispositions, l'entité *B* peut vérifier que l'entité *A* qui s'adresse à elle a bien été autorisée par le Serveur d'Autorisation *S* sous la même identité $ID_A$ ou $ID'_A$ (*"anti-phishing"*).

Le mécanisme utilisé dans ce mode de réalisation de l'invention est donc équivalent au mécanisme utilisé dans Kerberos par déchiffrement du ticket *T*. En revanche, selon Kerberos, l'entité *A* connaît la valeur du ticket *T* et le résultat $CHECK_A$ du chiffrement du ticket *T* au moyen de la clé secrète $K_{SB}$; si l'entité A est malhonnête (et dispose de moyens de calcul puissants), elle pourrait en déduire $K_{SB}$, par force brute ou un autre moyen cryptographique (l'algorithme de chiffrement étant en principe public).

L'invention résout ce problème, même dans le mode de réalisation où la transmission de la donnée $CHECK_{A,N}$ du Serveur d'Autorisation *S* à l'entité *B* est relayée par l'entité *A*. En effet, s'il est vrai que, dans la première variante de calcul de $CHECK_{A,N}$, décrite ci-dessus, l'entité *A* connaît $CHECK_{A,N}$ et les variables auxquelles est appliquée ladite fonction cryptographique, il ne lui servirait à rien d'en déduire la valeur de la clé secrète $K_{SB,N}$, car il est impossible à partir de cette dernière de calculer la clé secrète "mère" $K_{SB}$, ou bien $K_{SB,N+1}$, ou même le numéro de transaction courant *N*. Et dans la deuxième variante de calcul de $CHECK_{A,N}$, décrite ci-dessus, l'entité *A* ne connaît même pas toutes les variables auxquelles est appliquée ladite fonction cryptographique puisqu'elle ne connaît pas le numéro de transaction courant *N*.

On notera en outre que cette donnée $CHECK_{A,N}$ peut être, contrairement à la donnée $CHECK_A$ du procédé Kerberos, de taille modeste puisqu'elle ne résulte pas obligatoirement du chiffrement d'une clé secrète.

Corrélativement, l'invention concerne divers dispositifs.

Elle concerne ainsi, premièrement, un dispositif, dit Serveur d'Autorisation, pour sécuriser les communications dans un réseau de télécommunications lors d'une transaction entre une entité *A* et une entité *B*, comprenant des moyens pour :

- identifier et authentifier une entité *A* détentrice d'un identifiant $ID_A$,
- déterminer une clé secrète $K_{SB}$ que ledit Serveur d'Autorisation *S* partage avec une entité *B* avec laquelle l'entité *A* déclare son intention de communiquer, et
- engendrer une clé de session $K_{AB,N}$ et l'envoyer à l'entité *A*.

Ledit dispositif est remarquable en ce que, ladite clé de session $K_{AB,N}$ étant une fonction à sens unique de ladite clé secrète $K_{SB}$ et étant également fonction d'un entier *N*, appelé numéro de transaction, affecté à ladite transaction, il comprend en outre des moyens pour :

- engendrer un identifiant de transaction $IDTR_N$, qui est une fonction dépendant au moins dudit numéro de transaction *N* de manière non-inversible, et
- faire parvenir ledit identifiant de transaction $IDTR_N$ à ladite entité *B*.

Elle concerne aussi, deuxièmement, un dispositif, dit entité *B*, de communications sécurisées dans un réseau de télécommunications. Ledit dispositif est remarquable en ce qu'il comprend des moyens pour, lors d'une transaction impliquant ladite entité *B* et une entité *A* :

- recevoir des éléments comprenant un identifiant de transaction $IDTR_N$ engendré par un Serveur d'Autorisation *S*, ledit identifiant de transaction $IDTR_N$ étant une fonction dépendant au moins, de manière non-inversible, d'un entier *N*, appelé numéro de transaction, affecté à ladite transaction,
- vérifier que la valeur de l'identifiant de transaction $IDTR_N$ reçue figure au sein d'un ensemble de valeurs précalculées par l'entité *B* et correspondant à au moins une valeur prévue dudit numéro de transaction,
- en déduire la valeur courante *N* du numéro de transaction, et
- en déduire une clé de session $K_{AB,N}$ qui est, d'une part, fonction du numéro de transaction *N*, et d'autre part une fonction à sens unique d'une clé secrète $K_{SB}$ partagée par l'entité *B* et ledit Serveur d'Autorisation *S*.

Elle concerne aussi, troisièmement, un dispositif, dit entité *A*, de communications sécurisées dans un réseau de télécommunications, comprenant des moyens pour, lors d'une transaction impliquant ladite entité *A* et une entité *B* :

- s'identifier et s'authentifier comme le détenteur d'un identifiant $ID_A$ auprès d'un Serveur d'Autorisation *S*,
- déclarer audit Serveur d'Autorisation *S* son intention de communiquer avec une certaine entité *B*, et
- recevoir de la part du Serveur d'Autorisation *S* une clé de session $K_{AB,N}$.

Ledit dispositif est remarquable en ce que, ladite clé de session $K_{AB,N}$ étant une fonction à sens unique d'une clé secrète $K_{SB}$ partagée par le Serveur d'Autorisation *S* et l'entité *B* et étant également fonction d'un entier *N*, appelé numéro de transaction, affecté à ladite transaction, il comprend en outre des moyens pour :

- recevoir de la part du Serveur d'Autorisation *S* un identifiant de transaction $IDTR_N$, qui est une fonction dépendant au moins dudit numéro de transaction *N* de manière non-inversible, et
- envoyer à l'entité *B* des éléments comprenant au moins ledit identifiant de transaction $IDTR_N$.

Ce troisième dispositif est donc associé au mode de réalisation de l'invention, brièvement mentionné ci-dessus, dans lequel la transmission de l'identifiant de transaction $IDTR_N$ du Serveur d'Autorisation *S* à l'entité *B* est relayée par l'entité *A*.

L'invention concerne également un dispositif cumulant les moyens des deux derniers dispositifs décrits succinctement ci-dessus ; un tel dispositif peut se comporter, selon les circonstances, soit comme une entité expéditrice *A*, soit comme une entité destinataire *B*.

Les avantages offerts par ces dispositifs sont essentiellement les mêmes que ceux offerts par les procédés corrélatifs succinctement exposés ci-dessus.

On notera qu'il est possible de mettre en oeuvre le procédé de communications sécurisées selon l'invention au moyen d'instructions logicielles et/ou au moyen de circuits électroniques.

L'invention vise donc également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour la mise en oeuvre desdits moyens compris dans l'un quelconque des dispositifs de communications sécurisées décrits succinctement ci-dessus.

Les avantages offerts par ce programme d'ordinateur sont essentiellement les mêmes que ceux offerts par lesdits dispositifs.

D'autres aspects et avantages de l'invention apparaîtront à la lecture de la description détaillée ci-dessous de modes de réalisation particuliers, donnés à titre d'exemples non limitatifs. La description se réfère aux figures qui l'accompagnent, dans lesquelles :

- la figure 1 représente schématiquement un réseau de télécommunications et les principales entités auxquelles s'applique l'invention,
- la figure 2 représente schématiquement les étapes d'un procédé de communications sécurisées selon un premier mode de réalisation de l'invention, et
- la figure 3 représente schématiquement les étapes d'un procédé de communications sécurisées selon un deuxième mode de réalisation de l'invention.

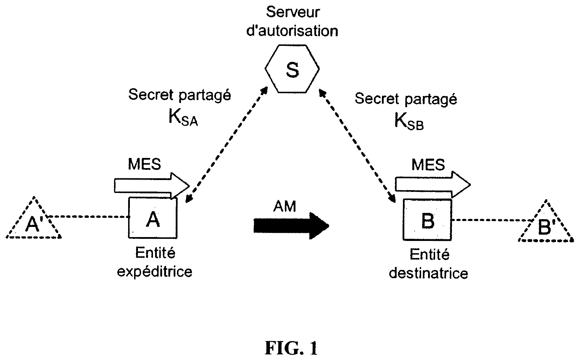

Le système illustré sur la **figure 1** comprend au moins trois entités interconnectées via un réseau de communication, par exemple un réseau de type Internet. Le procédé est particulièrement avantageux dans le cas d'un mode de transport non-connecté, mais convient également à un mode de transport connecté.

Les entités *A* et *B* sont abonnées au même service de communications sécurisées. Elles utilisent chacune, de manière classique, un terminal ou un serveur apte à émettre ou recevoir des messages de nature quelconque tels que, par exemple, des courriers électroniques ou des appels téléphoniques sur des canaux fixes ou mobiles. On notera que, dans le cadre de la présente invention, le mot "serveur" est, pour simplifier l'exposé, utilisé pour désigner uniformément tout type de dispositif informatique, et non uniquement les dispositifs informatiques classiquement désignés sous le nom de "serveurs".

En pratique, l'entité *A* peut jouer le rôle de serveur ou relais pour une entité *A'* connectée à l'entité *A* ; de même, l'entité *B* peut jouer le rôle de serveur ou relais pour une entité *B'* connectée à l'entité *B*.

L'entité *S* est un "Serveur d'Autorisation" (pouvant, naturellement, être composé en pratique de plusieurs serveurs physiques). Cette entité *S* permet à toute entité abonnée *A* de s'adresser de manière sécurisée à toute entité abonnée *B*; de plus, elle protège l'entité *B* contre la réception de messages indésirables. Suivant les applications et les scénarios de déploiement, l'entité *S* peut être indépendante des domaines applicatifs ou réseaux auxquels appartiennent les entités *A* et *B*, ou bien l'entité *S* peut appartenir au même domaine applicatif ou réseau que l'entité *A* et/ou que l'entité *B*.

De préférence, le Serveur d'Autorisation *S* prend en compte une séquence de valeurs entières, dites "numéros d'autorisation", séparément pour chaque entité abonnée au service de communications sécurisées. Le numéro d'autorisation *M* permet d'ordonner les transactions *initiées par une entité abonnée A* (ou une entité pour laquelle, le cas échéant, l'entité abonnée *A* joue le rôle de serveur ou de relais). A l'initialisation du procédé, les entités *S* et *A* se mettent d'accord sur un numéro d'autorisation initial $M_0$, qui varie de préférence d'une entité *A* à une autre. Ensuite, à chaque transaction, le numéro d'autorisation *M* est modifié selon un algorithme pouvant être public ; par exemple, *M* peut être incrémenté de 1 à chaque nouvelle transaction, mais cet algorithme peut également varier d'une entité *A* à une autre, auquel cas il doit figurer dans les secrets partagés par les entités *S* et *A*. Quoiqu'il en soit, le numéro d'autorisation n'est jamais transmis d'une entité à une autre. Grâce à ces dispositions, il est impossible pour un attaquant de trouver la valeur courante du numéro d'autorisation d'une entité *A*.

De même, le Serveur d'Autorisation *S* prend en compte une séquence de valeurs entières, dites "numéros de transaction", séparément pour chaque entité abonnée au service de communications sécurisées. Le numéro de transaction *N* permet d'ordonner les transactions auxquelles participe une entité abonnée *B*, mais qui sont *initiées par une autre entité abonnée* que l'entité *B* (ou qu'une entité pour laquelle, le cas échéant, l'entité *B* sert de serveur ou de relais). A l'initialisation du procédé, les entités *S* et *B* se mettent d'accord sur un numéro de transaction initial $N_0$, qui varie de préférence d'une entité $B$ à une autre. Ensuite, à chaque transaction, le numéro de transaction $N$ est modifié selon un algorithme pouvant être public ; par exemple, $N$ peut être incrémenté de 1 à chaque nouvelle transaction, mais cet algorithme peut également varier d'une entité $B$ à une autre, auquel cas il doit figurer dans les secrets partagés par les entités $S$ et $B$. Quoiqu'il en soit, le numéro de transaction n'est jamais transmis d'une entité à une autre. Grâce à ces dispositions, il est impossible pour un attaquant de trouver la valeur courante du numéro de transaction d'une entité $B$.

La transaction de numéro de transaction $N$ doit être autorisée par le Serveur d'Autorisation $S$, suite à une requête d'autorisation émise par l'entité $A$ vers $S$. En cas d'approbation, le Serveur d'Autorisation $S$ répond à cette requête d'autorisation en fournissant à l'entité $A$ les informations nécessaires pour entrer en contact avec l'entité $B$.

Lors de chaque transaction, suite à une identification de l'entité $A$, le Serveur d'Autorisation $S$ détermine une clé secrète à long terme $K_{SA}$ qu'il partage avec cette entité $A$. Cette clé secrète à long terme $K_{SA}$ permet de dériver d'autres clés secrètes qui sont utilisées au besoin pour assurer l'intégrité ou la confidentialité des messages échangés entre $A$ et $S$.

De même, il existe un secret partagé à long terme $K_{SB}$ entre les entités $S$ et $B$. Cette clé secrète à long terme $K_{SB}$ permet de dériver d'autres clés secrètes qui sont utilisées au besoin pour assurer l'intégrité ou la confidentialité des messages échangés (directement ou indirectement) entre $S$ et $B$.

De préférence, les entités $S$ et $A$ sont capables, pour toute autorisation de numéro $M$, d'engendrer indépendamment, en utilisant des algorithmes pouvant être publics :

- un "identifiant de requête" $IDREQ_M$, qui doit dépendre au moins de $M$ et être engendré au moyen d'un algorithme tel que, si l'on connaît une ou plusieurs valeurs $IDREQ_M$ utilisées dans des transactions précédentes, on ne peut pas en déduire la valeur courante de $M$, ou une valeur $IDREQ_{M+i}$ ($i > 0$) ; et

- un "identifiant d'autorisation" $IDAUT_M$, qui doit dépendre au moins de $M$ et être engendré au moyen d'un algorithme tel que, si l'on connaît une ou plusieurs valeurs $IDAUT_M$ utilisées dans des transactions précédentes, on ne peut pas en déduire la valeur courante de $M$, ou une valeur $IDAUT_{M+i}$ ($i > 0$)

De même, pour toute transaction de numéro $N$, les entités $S$ et $B$ sont capables d'engendrer indépendamment, en utilisant des algorithmes pouvant être publics, un "identifiant de transaction" $IDTR_N$, qui doit dépendre au moins de $N$ et être engendré au moyen d'un algorithme tel que, si l'on connaît une ou plusieurs valeurs $IDTR_N$ utilisées dans des transactions précédentes, on ne peut pas en déduire la valeur courante de $N$,

ou une valeur $IDTR_{N+i}$ ($i > 0$).

Dans un souci de sécurité accrue, on peut faire dépendre l'identifiant de transaction $IDTR_N$ à la fois du numéro de transaction $N$ et de la clé secrète $K_{SB}$.

De plus, les entités $S$ et $B$ sont capables d'engendrer indépendamment, en utilisant des algorithmes pouvant être publics, la clé (primaire) de session $K_{AB,N}$ utilisée entre les entités $A$ et $B$ pour la transaction et la session courantes ; cette clé de session doit dépendre au moins de $N$ et de $K_{SB}$, et être engendrée au moyen d'un algorithme tel que, même si l'on connaît la valeur de $K_{AB,N}$ et la valeur de $N$, on ne peut pas en déduire la valeur de $K_{SB}$.

De manière classique, la clé primaire de session (ou de transaction) $K_{AB,N}$ permet de dériver d'autres clés secrètes qui sont utilisées au besoin pour assurer l'intégrité ou la confidentialité des messages échangés entre $A$ et $B$.

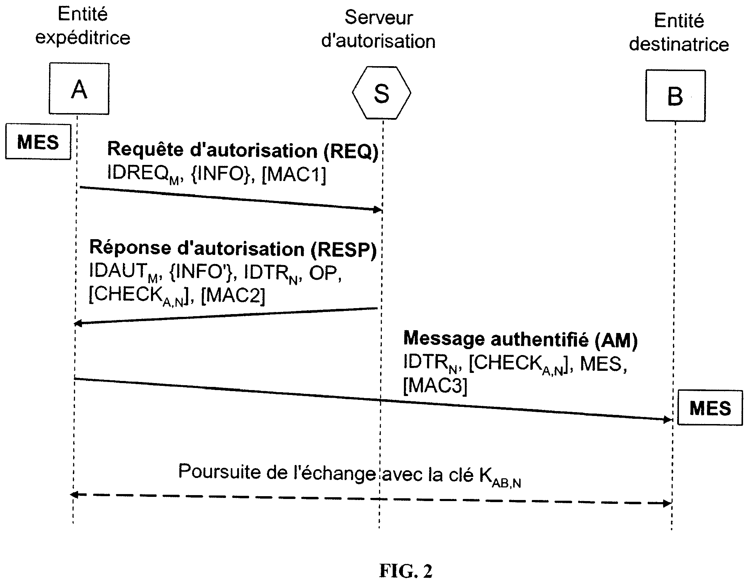

La **figure 2** représente schématiquement les étapes d'un premier mode de réalisation du procédé selon l'invention, dans lequel la transmission de l'identifiant de transaction $IDTR_N$ du Serveur d'Autorisation $S$ à l'entité $B$ est relayée par l'entité $A$.

Le présent mode de réalisation a principalement pour objet la mise en place sécurisée d'une clé de session $K_{AB,N}$ entre les entités $A$ et $B$ pour la transaction de numéro $N$, l'usage subséquent (par exemple, transmission confidentielle de flux multimédias, ou paiement électronique) que feront ces entités $A$ et $B$ de cette clé de session $K_{AB,N}$ au cours de la session est sans importance du point de vue de l'invention.

Pour fixer les idées, on supposera qu'une entité $A$, dite "client expéditeur", souhaite envoyer un "message original" MES à une, ou plusieurs, entité(s) $B$, dite(s) "client(s) destinataire(s)". On va décrire à présent les étapes principales de ce mode de réalisation.

Lors d'une première étape E1, une nouvelle transaction est authentifiée, et autorisée, par un Serveur d'Autorisation $S$.

Plus précisément, lors d'une sous-étape E1.1, l'entité A initie une transaction en envoyant une requête d'autorisation REQ au Serveur d'Autorisation $S$, avec qui elle partage une clé secrète $K_{SA}$. Cette requête d'autorisation REQ contient au moins des éléments INFO permettant au Serveur d'Autorisation $S$ d'authentifier l'entité $A$, ces éléments comprenant au moins un identifiant $ID_A$ de cette entité.

De préférence, la requête d'autorisation REQ contient également un identifiant de requête $IDREQ_M$, décrit ci-dessus, calculé pour le numéro d'autorisation $M$ courant (c'est-à-dire la première valeur $M$ telle que l'entité $A$ a précédemment émis toutes les requêtes de numéro d'autorisation précédant cette valeur de $M$ dans une séquence prédéterminée de numéros d'autorisation).

La requête d'autorisation REQ peut contenir en outre des informations caractérisant le message MES ou permettant d'identifier l'entité $B$.

Enfin, lorsque l'intégrité des échanges entre $A$

et *S* n'est pas assurée par le protocole de transport sous-jacent, la requête d'autorisation REQ contient de préférence un code d'authentification MAC1 calculé sur tout ou partie des éléments précédemment cités de la requête REQ. Pour ce faire, on utilisera une clé secrète dérivée de la clé secrète $K_{SA}$, que l'on notera $K_{SA,M,MAC1}$ si elle dépend de *M* (ce qui est préférable en termes de sécurité) et $K_{SA,MAC1}$ si elle n'en dépend pas (afin de simplifier les calculs requis par le procédé).

On notera également, concernant les identités des entités *A* et *B*, que :

- dans certains cas, l'entité *A* ne connaît pas complètement l'identité du client destinataire de son message original MES ; cette identité est alors déterminée par le Serveur d'Autorisation *S* ;
- dans certains cas, il est possible que, pour des besoins d'anonymat, l'identifiant $ID_A$ de l'entité *A* ne soit pas révélé à l'entité *B,* ou que l'entité *A* demande au Serveur d'Autorisation *S* de présenter l'entité *A* à l'entité *B* sous un "identifiant dérivé" $ID'_A$ ; et
- le cas échéant, suivant l'architecture considérée, les identités de *A* ou *B* peuvent être remplacées ou complétées par celles de *A'* ou *B'* (cf. description de la figure 1 ci-dessus).

Lors d'une sous-étape E1.2, sur réception de la requête d'autorisation REQ, le Serveur d'Autorisation *S* décide, en fonction des informations contenues dans cette requête, d'autoriser ou non la transaction.

En particulier, si la requête d'autorisation REQ comprend un identifiant de requête $IDREQ_M$, le Serveur d'Autorisation *S* compare sa valeur à l'identifiant de requête qu'il calcule, ou a précalculé, pour la ou des valeur(s) du numéro d'autorisation *M* faisant suite, pour la séquence convenue avec l'entité *A,* aux numéros d'autorisation précédemment utilisés. En effet, lorsque le protocole de transport sous-jacent est non-connecté, il est prudent de prévoir une certaine fenêtre prédéterminée de telles valeurs de *M*, car il est possible que les requêtes d'autorisation REQ ne soient pas reçues par le Serveur d'Autorisation S dans l'ordre de leur émission par l'entité *A* ; cette opération identifie la valeur du numéro d'autorisation *M* associée à la présente requête d'autorisation REQ.

Si la requête d'autorisation REQ reçue est associée à un code d'authentification MAC1, le Serveur d'Autorisation *S* vérifie alors l'intégrité des éléments de la requête d'autorisation REQ concernés.

Si besoin, le Serveur d'Autorisation *S* détermine l'identité du, ou des, client(s) destinataire(s) *B* (ou *B'*). Enfin, le Serveur d'Autorisation *S* vérifie, optionnellement, les éventuelles listes blanches ou noires de l'entité *B* relativement à l'entité *A,* au cas où l'entité *B* aurait déclaré, par exemple, refuser toute transaction avec cette entité *A* en particulier.

Si la transaction est autorisée, le Serveur d'Autorisation *S* transmet alors à l'entité *A,* lors d'une étape E2, une réponse d'autorisation RESP contenant au moins la clé de session $K_{AB,N}$.

Lorsque la confidentialité des échanges entre le Serveur d'Autorisation *S* et l'entité *A* n'est pas assurée par le protocole de transport sous-jacent, le Serveur d'Autorisation *S* envoie à l'entité *A* la clé de session $K_{AB,N}$ sous une forme confidentielle notée *OP*.

Pour ce faire, une solution consiste simplement à chiffrer la clé de session $K_{AB,N}$ au moyen d'un algorithme utilisant ladite clé secrète $K_{SA}$ ou une clé dérivée de cette clé secrète $K_{SA}$. La clé de session $K_{AB,N}$ pourra alors être calculée par l'entité *A* à partir de cette forme chiffrée au moyen d'un algorithme de déchiffrement utilisant la clé secrète $K_{SA}$ ou ladite clé dérivée de la clé secrète $K_{SA}$. Cependant, une telle solution est assez consommatrice en termes de calcul.

On préférera donc, en variante, une solution consistant à masquer de façon inversible la clé de session $K_{AB,N}$ au moyen d'une clé $K_{SA,M}$ dont la valeur est une fonction à sens unique de la clé secrète $K_{SA}$ et du numéro d'autorisation *M* : autrement dit, dans cette seconde variante, *OP* est une valeur publique correspondant à une ou plusieurs opérations qui, lorsqu'elles sont appliquées à ladite clé $K_{SA,M}$, permettent d'obtenir la clé de session $K_{AB,N}$. Par exemple, on peut prévoir que la clé $K_{SA,M}$ comporte le même nombre de bits que $K_{AB,N}$, et que la valeur masquée *OP* est simplement calculée selon la formule :

$$OP = K_{SA,M} \ \text{XOR} \ K_{AB,N} \ ,$$

où le symbole "XOR " désigne l'addition bit à bit (opération "ou exclusif"). En effet, dans cet exemple, on peut simplement retrouver $K_{AB,N}$ à partir de $K_{SA,M}$ et *OP* selon la formule :

$$K_{AB,N} = K_{SA,M} \ \text{XOR} \ OP \ .$$

Du point de vue sécurité, un attaquant "écoutant" l'échange entre le Serveur d'Autorisation *S* et l'entité *A* connaîtrait la valeur *OP,* mais un tel attaquant ne pourrait pas en déduire $K_{AB,N}$ car il ne connaît pas $K_{SA,M}$ (la découverte de $K_{SA,M}$ par recherche exhaustive étant du même niveau de complexité que celle de $K_{AB,N}$).

Cette seconde variante a également pour avantage que le Serveur d'Autorisation *S* et l'entité *A* peuvent précalculer la clé $K_{SA,M}$ pour une valeur quelconque du numéro d'autorisation *M,* indépendamment du numéro de transaction *N* ; ensuite, le Serveur d'Autorisation *S* peut aisément calculer la valeur *OP*, et l'entité *A* peut aisément déduire la clé de session $K_{AB,N}$ de la valeur *OP*. Ce précalcul de la clé $K_{SA,M}$ peut être réalisé en parallèle avec d'autres opérations, alors que dans la première variante, le chiffrement et déchiffrement de la clé $K_{AB,N}$ doit être réalisé conjointement à l'émission et à la réception de la réponse d'autorisation RESP.

Concernant par ailleurs l'identifiant de transaction $IDTR_N$ décrit ci-dessus, le Serveur d'Autorisation $S$ transmet également, dans ce premier mode de réalisation, cet identifiant de transaction $IDTR_N$ à l'entité $A$, qui se chargera de le retransmettre à l'entité $B$ lors de la sous-étape E3.2 décrite ci-dessous.

On notera qu'il est possible, optionnellement, de transmettre l'identifiant de transaction $IDTR_N$ en clair. Néanmoins, dans le cas où la confidentialité des échanges entre le Serveur d'Autorisation $S$ et l'entité $A$ n'est pas assurée par le protocole de transport sous-jacent, si un attaquant était capable de lire sa valeur, il pourrait envoyer très rapidement à l'entité $B$ un ou plusieurs messages invalides de façon à ce qu'ils soient reçus par l'entité $B$ *avant* le message légitime émis par l'entité $A$. L'entité $B$ détecterait en fait une telle attaque, mais seulement après voir procédé à des vérifications supplémentaires (voir ci-dessous) car la valeur de l'identifiant de transaction $IDTR_N$ lui paraîtrait correcte. L'entité $B$ serait donc exposée à un risque d'attaque par inondation. Aussi, dans le cas considéré, le Serveur d'Autorisation $S$ enverra à l'entité $A$ l'identifiant de transaction $IDTR_N$ de préférence chiffré ou masqué au moyen de la clé secrète $K_{SA}$ ou d'une clé secrète dérivée de cette clé secrète $K_{SA}$, de manière analogue aux deux variantes ci-dessus concernant la protection de la clé de session $K_{AB,N}$.

Si la requête d'autorisation REQ comprenait un identifiant de requête $IDREQ_M$, la réponse d'autorisation RESP contient alors en outre l'identifiant d'autorisation $IDAUT_M$, décrit ci-dessus, calculé pour la même valeur du numéro d'autorisation $M$.

La réponse d'autorisation RESP peut contenir également :

- aux fins de vérification, un sous-ensemble INFO' des informations INFO contenues dans la requête d'autorisation REQ ; et
- une donnée $CHECK_{A,N}$ déduite, au moyen d'une fonction cryptographique dépendant d'une clé secrète $K_{SB,N}$ dérivée de ladite clé secrète $K_{SB}$ et du numéro de transaction $N$, d'un ensemble d'éléments tirés de la requête d'autorisation REQ ainsi que, de préférence, d'un aléa engendré simultanément, lors de chaque transaction, par le Serveur d'Autorisation $S$ et l'entité $B$ (cet aléa empêche une entité $A$ malveillante de trouver la clé secrète $K_{SB,N}$ par inversion de la donnée $CHECK_{A,N}$).

Comme indiqué ci-dessus, il est possible d'envisager des applications de l'invention dans lesquelles l'entité $A$ est autorisée à rester anonyme vis-à-vis de l'entité $B$; dans ce cas (ainsi que dans d'autres cas éventuellement), lesdits éléments tirés de la requête d'autorisation REQ et dont le chiffrement fournit la donnée $CHECK_{A,N}$ ne contiendront aucun identifiant de l'entité $A$, ou contiendront ledit identifiant dérivé $ID'_A$ de l'entité $A$.

Enfin, lorsque l'intégrité des échanges entre $A$ et $S$ n'est pas assurée par le protocole de transport sous-jacent, la réponse d'autorisation RESP contient de préférence un code d'authentification MAC2 calculé sur tout ou partie des éléments précédemment cités de la réponse RESP. Pour ce faire, on utilisera une clé secrète dérivée de la clé secrète $K_{SA}$, que l'on notera $K_{SA,M,MAC2}$ si elle dépend de $M$ (ce qui est préférable en termes de sécurité) et $K_{SA,MAC2}$ si elle n'en dépend pas (afin de simplifier les calculs requis par le procédé).

Lors d'une étape E3, l'entité $A$ reçoit la réponse d'autorisation RESP de la part du Serveur d'Autorisation $S$, et envoie un "message authentifié" AM à l'entité $B$.

Plus précisément, lors d'une sous-étape E3.1, après réception de la réponse d'autorisation RESP, l'entité $A$ effectue de préférence les vérifications suivantes :

- si la réponse d'autorisation RESP reçue contient un identifiant d'autorisation $IDAUT_M$, l'entité $A$ compare sa valeur aux identifiants de d'autorisation qu'elle calcule, ou a précalculé, pour les valeurs de $M$ affectées à de précédentes requêtes d'autorisation envoyées par l'entité $A$ au Serveur d'Autorisation S et pour lesquelles l'entité $A$ n'a pas encore reçu de réponse d'autorisation ; cette opération identifie la valeur du numéro d'autorisation $M$ associée à la présente réponse d'autorisation RESP ;
- si la réponse d'autorisation RESP reçue contient des données censées appartenir à un sous-ensemble des informations contenues dans la requête d'autorisation REQ, l'entité $A$ vérifie que ces informations correspondent bien à une requête d'autorisation REQ précédemment émise par elle ; et
- si la réponse d'autorisation RESP reçue est associée à un code d'authentification MAC2, l'entité $A$ vérifie l'intégrité des éléments de la réponse d'autorisation RESP concernés.

Si ces vérifications sont positives, lors d'une sous-étape E3.2, l'entité $A$ extrait de la réponse d'autorisation RESP la clé de session $K_{AB,N}$ (le cas échéant, via la valeur confidentielle $OP$ comme décrit ci-dessus), l'identifiant de transaction $IDTR_N$, et, le cas échéant, la donnée $CHECK_{A,N}$. L'entité $A$ envoie alors à l'entité $B$ un "message authentifié" AM comprenant le message original MES, l'identifiant de transaction $IDTR_N$, et, le cas échéant, la donnée $CHECK_{A,N}$.

Lorsque l'intégrité des échanges entre $A$ et $B$ n'est pas assurée par le protocole de transport sous-jacent, le message authentifié AM contient de préférence un code d'authentification MAC3 calculé sur tout ou partie des éléments précédemment cités de ce message AM ; pour ce faire, on utilisera avantageusement la clé de session $K_{AB,N}$ ou une clé secrète $K_{AB,N,MAC}$ dérivée de la clé de session $K_{AB,N}$.

Sauf en cas de besoin d'anonymat complet, le message authentifié AM comprendra l'identifiant $ID_A$ ou l'identifiant dérivé $ID'_A$ de l'entité $A$. Cet identifiant pourra naturellement, lui aussi, faire partie desdits éléments servant de base au calcul du code d'authentification MAC3.

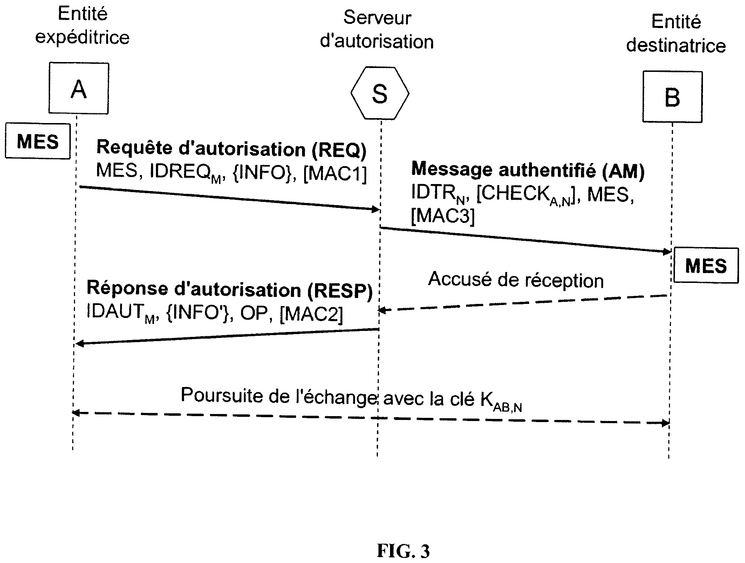

On notera que, en variante (cf. notamment les exemples d'architecture présentés ci-dessous), le message authentifié AM peut être envoyé par une entité autorisée autre que l'entité $A$ elle-même, par exemple un autre serveur réseau. Le cas où le message authentifié AM est envoyé "directement" par le Serveur d'Autorisation $S$ sera décrit ci-dessous en référence à la figure 3.

Lors d'une étape E4, l'entité $B$ reçoit le message authentifié AM et détermine la clé de session.

Plus précisément, lors d'une sous-étape E4.1, après réception d'un message authentifié AM, l'entité $B$ vérifie que l'élément $IDTR_N$ reçu correspond bien à un identifiant de transaction attendu. De préférence, l'entité $B$ précalcule des valeurs $IDTR_N$ pour une séquence prédéterminée de valeurs de $N$.

Si la valeur $IDTR_N$ reçue est valide, l'entité $B$ en déduit la valeur courante $N$ du numéro de transaction, et récupère ou calcule la clé de session $K_{AB,N}$, ainsi que, optionnellement, ladite clé secrète $K_{SB,N}$ et/ou ladite clé secrète $K_{AB,N,MAC}$ associées à cette transaction.

Optionnellement, l'entité $B$ vérifie ensuite que :

- les informations que l'entité $B$ a reçues sont cohérentes avec le code d'authentification MAC3 (si présent) et la clé de session $K_{AB,N}$ ou la clé secrète $K_{AB,N,MAC}$, et/ou
- les informations que l'entité $B$ a reçues sont cohérentes avec la donnée $CHECK_{A,N}$ (si présente) et la clé secrète $K_{SB,N}$.

Notamment, l'entité $B$ vérifie, le cas échéant, au moyen de ladite clé secrète $K_{SB,N}$, la cohérence entre, d'une part, la donnée $CHECK_{A,N}$, et d'autre part lesdits éléments comprenant l'identifiant $ID_A$ ou l'identifiant dérivé $ID'_A$ reçus de l'entité $A$.

Enfin, si ces vérifications sont positives, lors d'une sous-étape E4.2, l'entité $B$ extrait le message original MES du message authentifié AM, et transmet, le cas échéant, ce message original MES à un client destinataire $B'$.

La **figure 3** représente schématiquement les étapes d'un deuxième mode de réalisation du procédé selon l'invention.

Dans ce mode de réalisation, une entité $A$, dite "client expéditeur", souhaite envoyer à une, ou plusieurs, entité(s) $B$, dite(s) "client(s) destinataire(s)" un véritable message original MES. Par ailleurs, ce message original MES peut, dans certaines applications (par exemple, si le message MES est une demande d'initiation d'appel VoIP), jouer simultanément le rôle de requête d'autorisation REQ.

Le présent mode de réalisation se distingue essentiellement du premier mode de réalisation, décrit ci-dessus en référence à la figure 2, en ce que le Serveur d'Autorisation $S$ transmet le message authentifié AM à l'entité $B$ "directement", c'est-à-dire sans utiliser l'entité $A$ comme relai. Ce mode de réalisation présente donc comme inconvénient un surplus de traitement pour le Serveur d'Autorisation $S$, mais il peut néanmoins s'avérer pratique dans certaines architectures (voir exemples ci-dessous).

On va décrire à présent les étapes principales de ce mode de réalisation.

La première étape E'1 est analogue à l'étape E1 du premier mode de réalisation. On notera toutefois que, dans ce deuxième mode de réalisation, la requête d'autorisation REQ envoyée par l'entité $A$ au Serveur d'Autorisation $S$ contient toujours le message original MES en entier.

La deuxième étape E'2 est analogue à l'étape E2 du premier mode de réalisation, si ce n'est que la réponse d'autorisation RESP ne contient ni l'identifiant de transaction $IDTR_N$, ni la donnée $CHECK_{A,N}$.

Lors d'une étape E'3, le Serveur d'Autorisation $S$ transmet "directement" à l'entité $B$ le message authentifié AM comprenant le message original MES, l'identifiant de transaction $IDTR_N$, et, le cas échéant, la donnée $CHECK_{A,N}$. Lorsque l'intégrité des échanges entre $S$ et $B$ n'est pas assurée par le protocole de transport sousjacent, le message authentifié AM contient de préférence un code d'authentification MAC3 calculé sur tout ou partie des éléments précédemment cités de ce message AM ; pour ce faire, on pourra utiliser, comme dans le premier mode de réalisation, la clé de session $K_{AB,N}$ ou une clé secrète $K_{AB,N,MAC}$ dérivée de la clé de session $K_{AB,N}$ ; en variante, on pourra utiliser ici la clé secrète $K_{SB}$ ou une clé secrète dérivée de la clé secrète $K_{SB}$.

On notera que, comme illustré sur la figure 3, l'étape E'3 peut précéder l'étape E'2. Cet ordre opératoire permet avantageusement d'interrompre la transaction avant que le Serveur d'Autorisation $S$ n'envoie la réponse d'autorisation RESP à l'entité $A$, au cas où l'entité $B$ n'envoie pas à $S$ un accusé de réception du message authentifié AM si un tel accusé de réception était prévu, ou au cas où l'entité $B$ envoie à $S$ un accusé de réception dans lequel l'entité $B$ déclare refuser cette transaction avec l'entité $A$.

Enfin, l'étape E'4 est analogue à l'étape E4 du premier mode de réalisation. Notamment, si le message authentifié AM a été protégé en intégrité au moyen d'un code d'authentification MAC3, l'entité $B$ vérifie la cohérence de ce code avec les autres informations reçues, au moyen de la clé secrète appropriée.

On notera que cette étape E'4 doit naturellement intervenir postérieurement à l'étape E'3, mais qu'elle peut précéder l'étape E'2.

On va à présent examiner, à titre d'exemples, diverses architectures possibles pour la mise en oeuvre de l'invention.

Les trois premiers exemples s'appliquent à la VoIP. Les services et réseaux VoIP constituent un contexte d'application particulièrement intéressant, car, en plus de fortes contraintes de sécurité, ils ont également des contraintes de temps-réel, de nombre d'entités déployées (actuellement plusieurs millions dans certains réseaux), de puissance des terminaux, ainsi que des contraintes légales qui imposent de pouvoir intercepter les communications sensibles. Ce besoin d'interceptions légales milite naturellement pour le contrôle des clés de session par une entité de confiance (ici, le Serveur d'Autorisation $S$), qui pourrait être alors un proxy d'un opérateur réseau.

(a) Communications VoIP intra-domaine

Les entités clientes $A$ et $B$, ainsi que le Serveur d'Autorisation $S$ font partie du réseau d'un même opérateur. Le Serveur d'Autorisation $S$ est un proxy VoIP de ce réseau qui dispose classiquement d'un secret partagé avec chacun des terminaux-client, ce secret ayant été établi lors de la phase de souscription au service, puis vérifié lors de la phase d'enregistrement du terminal-client au réseau.

La requête d'autorisation REQ envoyée par l'entité $A$ permet au Serveur d'Autorisation $S$ d'authentifier l'entité $A$ et de déterminer le routage pour atteindre l'entité $B$.

L'appel peut ensuite s'établir directement entre les entités $A$ et $B$ sans qu'il soit nécessaire d'établir une connexion TLS entre $A$ et $B$ pour assurer l'intégrité et la confidentialité de la signalisation. Le message MES correspond à la requête "INVITE".

(b) Interconnexions VoIP mode 1

Dans ce mode de réalisation, les entités expéditrice et destinataire sont localisées dans deux réseaux distincts, appartenant à des opérateurs différents ; le domaine expéditeur est noté D-EXP et le domaine destinataire D-DEST.

L'entité $A$ est l'un des proxys sortants du domaine expéditeur D-EXP. L'entité $A$ sert plusieurs terminaux clients $A'$ du domaine D-EXP ou des serveurs émetteurs $A'$ dans le même domaine, ou dans un domaine tiers lorsque le terminal-client est en situation de mobilité.

Le Serveur d'Autorisation $S$ est l'un des proxys entrants du domaine destinataire D-DEST. Le Serveur d'Autorisation $S$ protège et dessert une ou plusieurs entité(s) $B$ pouvant appartenir au domaine destinataire D-DEST ou à des domaines tiers.

L'entité $B$ peut correspondre directement au terminal-client destinataire. En variante, l'entité $B$ peut correspondre à un serveur récepteur, faisant partie du domaine destinataire D-DEST ou d'un domaine tiers, auquel cas le véritable terminal-client destinataire correspond à l'entité $B'$.

Dans la requête d'autorisation REQ, l'entité $A$ référence l'entité $B$ destinataire, via un ou plusieurs identifiants de niveau réseau, transport ou applicatif tels que l'adresse réseau de l'entité $B$, le nom de domaine auquel appartient l'entité $B$, une SIP_URI ou Tel_URI désignant l'entité cliente destinataire. De même, l'entité $A$ s'identifie par un ou plusieurs identifiants de niveau réseau, transport ou applicatif tels que son adresse réseau, ou le nom de domaine auquel elle appartient, ou une SIP_URI ou une Tel_URI désignant l'entité cliente expéditrice.

La réalisation de la transaction de numéro $N$ permet à $A$ et $B$ de partager la clé primaire de session $K_{AB,N}$. Cette clé de session permet d'authentifier le message d'établissement d'appel "INVITE". En complément, elle peut également servir à authentifier les autres phases de l'appel (requêtes "CANCEL", "ACK", "BYE" ou réponses associées). Elle peut aussi permettre de dériver des clés secondaires pour le chiffrement de flux média.

La requête d'autorisation REQ et la réponse d'autorisation RESP sont échangées entre un serveur expéditeur et un serveur destinataire, alors que le message AM est envoyé par un serveur expéditeur ou émetteur vers un serveur récepteur.

(c) Interconnexions VoIP mode 2

Comme ci-dessus, les entités expéditrice et destinataire sont localisées dans deux réseaux distincts notés D-EXP et D-DEST.

L'entité $A$ est un terminal client du domaine D-EXP ou bien un serveur émetteur du domaine expéditeur ou d'un domaine tiers. Si l'entité $A$ est un serveur émetteur, alors le véritable client expéditeur correspond à une entité $A'$.

Le Serveur d'Autorisation $S$ est l'un des proxys sortants du domaine expéditeur D-EXP, c'est à dire un serveur expéditeur. Le Serveur d'Autorisation $S$ dessert les entités $A$ du domaine expéditeur ou des domaines tiers, et autorise les communications avec le domaine destinataire.

L'entité $B$ est l'un des proxys entrants du domaine destinataire D-DEST. Cette entité sert, et protège, des entités $B'$ qui sont soit directement des terminaux-client, soit des serveurs récepteurs appartenant au domaine destinataire ou à des domaines tiers.

La requête d'autorisation REQ et la réponse d'autorisation RESP sont échangées dans le domaine expéditeur ou entre le domaine émetteur et le domaine expéditeur, alors que le message AM est envoyé par une entité cliente ou un serveur émetteur vers le serveur destinataire.

(d) Envoi d'e-mail ou de message instantané IM

L'architecture est similaire à celle pour les interconnexions VoIP (mode 1 ou mode 2) en ce qui concerne les entités $A$, $A'$, $S$, $B$, et $B'$.

Les identifiants utilisés dans la demande de transaction pour désigner les entités $A$ ou $A'$ (respectivement $B$ ou $B'$) sont des adresses e-mail, des adresses IM ou des noms de domaines.

La réalisation de la transaction de numéro $N$ permet à $A$ et $B$ de partager la clé de session primaire $K_{AB,N}$. Cette clé de session est utilisée pour authentifier et assurer l'intégrité du message e-mail ou IM envoyé de *A* vers *B*.

(e) Etablissement de connexion sécurisée

L'entité *A* envoie une requête d'autorisation au Serveur d'Autorisation *S* qui protège les accès à l'entité *B* avec laquelle l'entité *A* veut communiquer.

La requête d'autorisation comporte les identifiants des entités *A* et *B*, sous forme d'adresses réseau ou de transport, ou d'adresses applicatives par rapport au service considéré.

La réalisation de la transaction de numéro *N* permet à *A* et *B* de partager la clé de session primaire $K_{AB,N}$. Cette clé de session est ensuite utilisée pour établir une connexion sécurisée (IPSec, TLS, DTLS, ou autre) entre les entités *A* et *B*.

(f) Application à un service de type DNS/ENUM

Cette application du procédé selon l'invention concerne un service de mise en relation, où le Serveur d'Autorisation *S* est un serveur de type DNS ou ENUM dans le cas des applications VoIP. Cela permet d'éviter des attaques dans lesquelles une entité VoIP appelante revendique un numéro de téléphone qui n'est pas attribué à son réseau ou à son domaine applicatif.

Dans ce cas d'application, l'entité *A* est l'un des proxys sortants du domaine "domaine1" et dispose d'un secret partagé avec le Serveur d'Autorisation *S*. Avant d'émettre un appel vers l'entité *B*, l'entité *A* envoie une requête d'autorisation vers le Serveur d'Autorisation *S* pour authentifier l'appelant et obtenir une clé secrète d'appel vers *B*.

Le Serveur d'Autorisation *S* est un serveur de type DNS/ENUM qui dispose de secrets partagés $K_{SA}$, $K_{SB}$ avec un certain nombre de domaines, grâce à une phase de mise en relation préalable. Le Serveur d'Autorisation *S* joue le rôle de tiers de confiance.

L'entité *B* est l'un des proxys entrants du domaine "domaine2" et dispose d'un secret partagé avec le Serveur d'Autorisation *S* .

La réalisation de la transaction permet à l'entité *B* de vérifier que l'identifiant d'appelant présenté par l'entité *A* dans la requête "INVITE" a bien été authentifié par le Serveur d'Autorisation *S*. Elle permet de plus aux entités *A* et *B* de disposer d'un secret partagé $K_{AB,N}$ pouvant être utilisé pour protéger la suite de leur échange ou des flux média.

La mise en oeuvre de l'invention au sein des noeuds du réseau de télécommunications (notamment, les terminaux ou serveurs des entités telles que *A* ou *B* abonnées au service de communications sécurisées selon l'invention, ou le Serveur d'Autorisation *S*) peut être réalisée au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre du procédé de communications sécurisées selon l'invention.

En effet, l'invention vise aussi un programme d'ordinateur téléchargeable depuis un réseau de communication comprenant des instructions pour l'exécution de certaines au moins des étapes d'un procédé de communications sécurisées selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (*"floppy disc"* en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour être utilisé dans un dispositif de communications sécurisées selon l'invention.

**Revendications**

1. Procédé de communications sécurisées dans un réseau de télécommunications, dans lequel une transaction entre une entité *A* et une entité *B* dudit réseau comprend les étapes suivantes :

   a) l'entité *A* envoie à un Serveur d'Autorisation *S* une requête d'autorisation (REQ) dans laquelle l'entité *A* s'identifie et s'authentifie comme le détenteur d'un identifiant $ID_A$ ;
   b) l'entité *A* déclare au Serveur d'Autorisation *S* son intention de communiquer avec une certaine entité $B$ ; le Serveur d'Autorisation $S$ détermine une clé secrète $K_{SB}$ qu'il partage avec cette entité $B$ ; et

c) le Serveur d'Autorisation $S$ engendre une clé de session $K_{AB,N}$ et l'envoie à l'entité $A$ ;

ledit procédé étant **caractérisé en ce que** ladite clé de session $K_{AB,N}$ est une fonction à sens unique de ladite clé secrète $K_{SB}$ et est également fonction d'un entier $N$, appelé numéro de transaction, affecté à ladite transaction, et **en ce qu'**il comprend en outre les étapes suivantes :

d) le Serveur d'Autorisation $S$ engendre également un identifiant de transaction $IDTR_N$, qui est une fonction dépendant au moins dudit numéro de transaction $N$ de manière non-inversible ;

e) le Serveur d'Autorisation $S$ fait parvenir à l'entité $B$ des éléments comprenant au moins ledit identifiant de transaction $IDTR_N$ ; et

f) l'entité $B$ vérifie au moins que la valeur de l'identifiant de transaction $IDTR_N$ reçue lors de ladite étape e) figure au sein d'un ensemble de valeurs précalculées par l'entité $B$ au moyen d'un algorithme de modification du numéro de transaction et d'un numéro de transaction initial partagés avec le Serveur d'Autorisation $S$, et correspondant à au moins une valeur prévue du numéro de transaction ; si c'est le cas, l'entité $B$ en déduit d'abord la valeur courante du numéro de transaction $N$, et ensuite la valeur de la clé de session $K_{AB,N}$.

2. Procédé de communications sécurisées selon la revendication 1, **caractérisé en ce que** ladite requête d'autorisation (REQ) comprend un identifiant de requête $IDREQ_M$, qui est une fonction dépendant au moins, de manière non-inversible, d'un entier $M$, appelé numéro d'autorisation, affecté à cette requête d'autorisation (REQ).

3. Procédé de communications sécurisées selon la revendication 2, **caractérisé en ce que**, lors de ladite étape c), le Serveur d'Autorisation S envoie en outre à l'entité $A$ un identifiant d'autorisation $IDAUT_M$, qui est une fonction dépendant au moins, de manière non-inversible, dudit numéro d'autorisation $M$.

4. Procédé de communications sécurisées selon l'une quelconque des revendications 1 à 3, **caractérisé en ce que** tout ou partie desdits éléments envoyés à l'entité $B$ lors de ladite étape e) sont protégés en intégrité.

5. Procédé de communications sécurisées selon la revendication 4, **caractérisé en ce que** cette protection en intégrité est réalisée au moyen de ladite clé de session $K_{AB,N}$ ou d'une clé dérivée de cette clé de session $K_{AB,N}$.

6. Procédé de communications sécurisées selon l'une quelconque des revendications 1 à 5, **caractérisé en ce que** lesdits éléments que le Serveur d'Autorisation $S$ fait parvenir à l'entité $B$ lors de ladite étape e) comprennent également une donnée $CHECK_{A,N}$ dépendant du numéro de transaction $N$ et déduite, au moyen d'une fonction cryptographique dépendant d'une clé secrète $K_{SB,check}$ dérivée de ladite clé secrète $K_{SB}$, d'un ensemble d'éléments tirés de ladite requête d'autorisation (REQ), et, optionnellement, du numéro de transaction $N$.

7. Procédé de communications sécurisées selon l'une quelconque des revendications 1 à 6, **caractérisé en ce que** l'entité $A$ fait parvenir à l'entité $B$ ledit identifiant $ID_A$ de l'entité $A$, ou un identifiant dérivé $ID'_A$.

8. Procédé de communications sécurisées selon la revendication 6 et la revendication 7, **caractérisé en ce que** :

- ledit ensemble d'éléments dont est déduite ladite donnée $CHECK_{A,N}$ comprend l'identifiant $ID_A$ de l'entité $A$ ou ledit identifiant dérivé $ID'_A$, et
- lors de ladite étape f), l'entité $B$ vérifie, au moyen de ladite clé secrète $K_{SB,N}$, la cohérence entre, d'une part, la donnée $CHECK_{A,N}$ reçue conformément à la revendication 6, et d'autre part lesdits éléments comprenant l'identifiant $ID_A$ ou l'identifiant dérivé $ID'_A$ reçus conformément à la revendication 7.

9. Dispositif, dit Serveur d'Autorisation, pour sécuriser les communications dans un réseau de télécommunications lors d'une transaction entre une entité $A$ et une entité $B$, comprenant des moyens pour :

- identifier et authentifier une entité $A$ détentrice d'un identifiant $ID_A$,
- déterminer une clé secrète $K_{SB}$ que ledit Serveur d'Autorisation $S$ partage avec une entité $B$ avec laquelle l'entité $A$ déclare son intention de communiquer, et
- engendrer une clé de session $K_{AB,N}$ et l'envoyer à l'entité $A$, **caractérisé en ce que**, ladite clé de session $K_{AB,N}$ étant une fonction à sens unique de ladite clé secrète $K_{SB}$ et étant également fonction d'un entier $N$, appelé numéro de transaction, affecté à ladite transaction, il comprend en outre des moyens pour :
- engendrer un identifiant de transaction $IDTR_N$, qui est une fonction dépendant au moins dudit numéro de transaction $N$ de manière non-inversible, et

- faire parvenir ledit identifiant de transaction *ID-TR<sub>N</sub>* à ladite entité *B*.

**10.** Dispositif, dit entité *B*, de communications sécurisées dans un réseau de télécommunications, **caractérisé en ce qu'**il comprend des moyens pour, lors d'une transaction impliquant ladite entité *B* et une entité *A* :

- recevoir des éléments comprenant un identifiant de transaction *IDTR<sub>N</sub>* engendré par un Serveur d'Autorisation *S*, ledit identifiant de transaction *IDTR<sub>N</sub>* étant une fonction dépendant au moins, de manière non-inversible, d'un entier *N*, appelé numéro de transaction, affecté à ladite transaction,

- vérifier que la valeur de l'identifiant de transaction *IDTR<sub>N</sub>* reçue figure au sein d'un ensemble de valeurs précalculées par l'entité *B* au moyen d'un algorithme de modification dudit numéro de transaction et d'un numéro de transaction initial partagés avec le Serveur d'Autorisation *S*, et correspondant à au moins une valeur prévue du numéro de transaction,

- en déduire la valeur courante *N* du numéro de transaction, et

- en déduire une clé de session $K_{AB,N}$ qui est, d'une part, fonction du numéro de transaction *N*, et d'autre part une fonction à sens unique d'une clé secrète $K_{SB}$ partagée par l'entité *B* et ledit Serveur d'Autorisation *S*.

**11.** Dispositif, dit entité *A*, de communications sécurisées dans un réseau de télécommunications, comprenant des moyens pour, lors d'une transaction impliquant ladite entité *A* et une entité *B* :

- s'identifier et s'authentifier comme le détenteur d'un identifiant *ID<sub>A</sub>* auprès d'un Serveur d'Autorisation *S*,

- déclarer audit Serveur d'Autorisation *S* son intention de communiquer avec une certaine entité *B*, et

- recevoir de la part du Serveur d'Autorisation *S* une clé de session $K_{AB,N}$

**caractérisé en ce que**, ladite clé de session $K_{AB,N}$ étant une fonction à sens unique d'une clé secrète $K_{SB}$ partagée par le Serveur d'Autorisation *S* et l'entité *B* et étant également fonction d'un entier *N*, appelé numéro de transaction, affecté à ladite transaction, il comprend en outre des moyens pour :

- recevoir de la part du Serveur d'Autorisation *S* un identifiant de transaction *IDTR<sub>N</sub>*, qui est une fonction dépendant au moins dudit numéro de transaction *N* de manière non-inversible, et

- envoyer à l'entité *B* des éléments comprenant au moins ledit identifiant de transaction *IDTR<sub>N</sub>*.

**12.** Dispositif de communications sécurisées dans un réseau de télécommunications, **caractérisé en ce qu'**il comprend des moyens selon la revendication 10 et selon la revendication 11.

**13.** Moyen de stockage de données inamovible, ou partiellement ou totalement amovible, comportant des instructions de code de programme informatique pour la mise en oeuvre desdits moyens compris dans un dispositif de communications sécurisées selon l'une quelconque des revendications 9 à 12.

**14.** Programme d'ordinateur téléchargeable depuis un réseau de communication et/ou stocké sur un support lisible par ordinateur et/ou exécutable par un microprocesseur, **caractérisé en ce qu'**il comprend des instructions pour la mise en oeuvre desdits moyens compris dans un dispositif de communications sécurisées selon l'une quelconque des revendications 9 à 12.

**Patentansprüche**

**1.** Verfahren zur sicheren Kommunikation in einem Telekommunikationsnetzwerk, bei dem eine Transaktion zwischen einer Entität A und einer Entität B des Netzwerks die folgenden Schritte umfasst:

a) die Entität A sendet an einen Autorisierungsserver S eine Autorisierungsanfrage (REQ), in der sich die Entität A als Besitzer einer Kennung ID<sub>A</sub> identifiziert und authentifiziert;

b) die Entität A meldet dem Autorisierungsserver S ihre Absicht, mit einer bestimmten Entität B zu kommunizieren; der Autorisierungsserver S bestimmt einen geheimen Schlüssel K<sub>SB</sub>, den er mit dieser Entität B teilt, und

c) der Autorisierungsserver S erzeugt einen Sitzungsschlüssel $K_{AB,N}$ und sendet ihn an die Entität A;

wobei das Verfahren **dadurch gekennzeichnet ist, dass** der Sitzungsschlüssel K<sub>AB,N</sub> eine Einwegfunktion des geheimen Schlüssels K<sub>SB</sub> ist und auch eine Funktion einer ganzen Zahl N, Transaktionsnummer genannt, ist, die der Transaktion zugewiesen ist, und dass es ferner die folgenden Schritte umfasst:

d) der Autorisierungsserver S erzeugt auch eine Transaktionskennung IDTR<sub>N</sub>, die eine Funktion ist, die auf nicht-invertierbare Weise mindestens von der Transaktionsnummer N abhängig ist;

e) der Autorisierungsserver S lässt der Entität B Elemente zukommen, die mindestens die Transaktionskennung IDTR<sub>N</sub> umfassen, und

f) die Entität B überprüft mindestens, dass der Wert der in Schritt e) empfangenen Transaktionskennung $IDTR_N$ in einer Gruppe von Werten vorkommt, die von der Entität B mittels eines Algorithmus zur Änderung der Transaktionsnummer und einer ursprünglichen Transaktionsnummer, die mit dem Autorisierungsserver S geteilt werden, vorberechnet werden, und mindestens einem vorgesehenen Wert der Transaktionsnummer entspricht; falls dies der Fall ist, leitet die Entität B daraus zunächst den aktuellen Wert der Transaktionsnummer N und anschließend den Wert des Sitzungsschlüssels $K_{AB,N}$ her.

2. Verfahren zur sicheren Kommunikation nach Anspruch 1, **dadurch gekennzeichnet, dass** die Autorisierungsanfrage (REQ) eine Anfragenkennung $IDREQ_M$ umfasst, die eine Funktion ist, die mindestens, auf nicht-invertierbare Weise, von einer ganzen Zahl M, Autorisierungsnummer genannt, abhängig ist, die dieser Autorisierungsanfrage (REQ) zugewiesen ist.

3. Verfahren zur sicheren Kommunikation nach Anspruch 2, **dadurch gekennzeichnet, dass** der Autorisierungsserver S in Schritt c) an die Entität A ferner eine Autorisierungskennung $IDAUT_M$ sendet, die eine Funktion ist, die mindestens, auf nicht-invertierbare Weise, von der Autorisierungsnummer M abhängig ist.

4. Verfahren zur sicheren Kommunikation nach einem der Ansprüche 1 bis 3, **dadurch gekennzeichnet, dass** alle oder ein Teil der in Schritt e) an die Entität B gesendeten Elemente integritätsgeschützt sind.

5. Verfahren zur sicheren Kommunikation nach Anspruch 4, **dadurch gekennzeichnet, dass** dieser Integritätsschutz mittels des Sitzungsschlüssels $K_{AB,N}$ oder eines von diesem Sitzungsschlüssel $K_{AB,N}$ abgeleiteten Schlüssels realisiert wird.

6. Verfahren zu sicheren Kommunikation nach einem der Ansprüche 1 bis 5, **dadurch gekennzeichnet, dass** die Elemente, die der Autorisierungsserver S der Entität B in Schritt e) zukommen lässt, auch einen Datenwert $CHECK_{A,N}$ umfassen, der von der Transaktionsnummer N abhängig ist und mittels einer Verschlüsselungsfunktion, die von einem geheimen Schlüssel $K_{SB,check}$ abhängig ist, der von dem geheimen Schlüssel $K_{SB}$ abgeleitet wird, von einer Gruppe von Elementen, die der Autorisierungsanfrage (REQ) entnommen werden, und optional von der Transaktionsnummer N hergeleitet wird.

7. Verfahren zur sicheren Kommunikation nach einem der Ansprüche 1 bis 6, **dadurch gekennzeichnet,**

**dass** die Entität A der Entität B die Kennung $ID_A$ der Entität A oder eine abgeleitete Kennung $ID'_A$ zukommen lässt.

8. Verfahren zur sicheren Kommunikation nach Anspruch 6 und Anspruch 7, **dadurch gekennzeichnet, dass**:

- die Gruppe von Elementen, von welcher der Datenwert $CHECK_{A,N}$ hergeleitet wird, die Kennung $ID_A$ der Entität A oder die abgeleitete Kennung $ID'_A$ umfasst, und
- die Entität B während des Schritts f) mittels des geheimen Schlüssels $K_{SB,N}$ die Kohärenz zwischen dem gemäß Anspruch 6 erhaltenen Datenwert $CHECK_{A,N}$ einerseits und den gemäß Anspruch 7 erhalten Elementen, welche die Kennung $ID_A$ oder die abgeleitete Kennung $ID'_A$ umfassen, anderseits überprüft.

9. Vorrichtung, Autorisierungsserver genannt, zum Sichern der Kommunikation in einem Telekommunikationsnetzwerk bei einer Transaktion zwischen einer Entität A und einer Entität B, umfassend Mittel, um:

- eine Entität A, die eine Kennung $ID_A$ besitzt, zu identifizieren und zu authentifizieren,
- einen geheimen Schlüssel $K_{SB}$ zu bestimmen, den der Autorisierungsserver S mit der Entität B teilt, mit der die Entität A zu kommunizieren beabsichtigt, und
- einen Sitzungsschlüssel $K_{AB,N}$ zu erzeugen und ihn an die Entität A zu senden,

**dadurch gekennzeichnet, dass** sie ferner, da der Sitzungsschlüssel $K_{AB,N}$ eine Einwegfunktion des geheimen Schlüssels $K_{SB}$ ist und auch eine Funktion einer ganzen Zahl N, Transaktionsnummer genannt, ist, die der Transaktion zugewiesen ist, Mittel umfasst, um:

- eine Transaktionskennung $IDTR_N$ zu erzeugen, die eine Funktion ist, die auf nicht-invertierbare Weise mindestens von der Transaktionsnummer N abhängig ist, und
- der Entität B die Transaktionskennung $IDTR_N$ zukommen zu lassen.

10. Vorrichtung, Entität B, zur sicheren Kommunikation in einem Telekommunikationsnetzwerk, **dadurch gekennzeichnet, dass** sie Mittel umfasst, um bei einer Transaktion, an der die Entität B und eine Entität A beteiligt sind:

- Elemente zu empfangen, die eine Transaktionskennung $IDTR_N$ umfassen, die von einem Autorisierungsserver S erzeugt wurde, wobei die Transaktionskennung IDTR$_N$ eine Funktion ist, die auf nicht-invertierbare Weise mindestens von einer ganzen Zahl N, Transaktionsnummer genannt, abhängig ist, die der Transaktion zugewiesen ist,

- zu überprüfen, dass der Wert der empfangenen Transaktionskennung IDTR$_N$ in einer Gruppe von Werten vorkommt, die von der Entität B mittels eines Algorithmus zur Änderung der Transaktionsnummer und einer ursprünglichen Transaktionsnummer, die mit dem Autorisierungsserver S geteilt werden, vorberechnet wird, und mindestens einem vorgesehenen Wert der Transaktionsnummer entspricht,

- daraus den aktuellen Wert N der Transaktionsnummer herzuleiten und

- daraus einen Sitzungsschlüssel K$_{AB, N}$ herzuleiten, der einerseits eine Funktion der Transaktionsnummer N ist und andererseits eine Einwegfunktion eines geheimen Schlüssels K$_{SB}$ ist, der von der Entität B und dem Autorisierungsserver S geteilt wird.

11. Vorrichtung, Entität A genannt, zur sicheren Kommunikation in einem Telekommunikationsnetzwerk, umfassend Mittel, um bei einer Transaktion, an der die Entität A und eine Entität B beteiligt sind:

- sich bei einem Autorisierungsserver S als Besitzer einer Kennung ID$_A$ zu identifizieren und zu authentifizieren,

- dem Autorisierungsserver S ihre Absicht zu melden, mit einer bestimmten Entität B zu kommunizieren, und

- vom Autorisierungsserver S einen Sitzungsschlüssel K$_{AB,N}$ zu empfangen,

**dadurch gekennzeichnet, dass** sie ferner, da der Sitzungsschlüssel K$_{AB,N}$ eine Einwegfunktion eines geheimen Schlüssels K$_{SB}$ ist, der vom Autorisierungsserver S und der Entität B geteilt wird, und auch eine Funktion einer ganzen Zahl N, Transaktionsnummer genannt, ist, die der Transaktion zugewiesen ist, Mittel umfasst, um:

- vom Autorisierungsserver S eine Transaktionskennung IDTR$_N$ zu empfangen, die eine Funktion ist, die auf nicht-invertierbare Weise mindestens von der Transaktionsnummer N abhängig ist, und

- an die Entität B Elemente zu senden, die mindestens die Transaktionskennung IDTR$_N$ umfassen.

12. Vorrichtung zur sicheren Kommunikation in einem Telekommunikationsnetzwerk, **dadurch gekennzeichnet, dass** sie Mittel nach Anspruch 10 und nach Anspruch 11 umfasst.

13. Nicht entnehmbares oder teilweise oder vollständig entnehmbares Datenspeichermedium, umfassend Computerprogrammcodeanweisungen zur Umsetzung der Mittel, die in einer Vorrichtung zur sicheren Kommunikation nach einem der Ansprüche 9 bis 12 enthalten sind.

14. Computerprogramm, das von einem Kommunikationsnetzwerk heruntergeladen werden kann und/oder auf einem computerlesbaren Datenträger gespeichert ist und/oder von einem Mikroprozessor ausführbar ist, **dadurch gekennzeichnet, dass** es Anweisungen zur Umsetzung der Mittel umfasst, die in einer Vorrichtung zur sicheren Kommunikation nach einem der Ansprüche 9 bis 12 enthalten sind.

**Claims**

1. Method for secure communications in a telecommunications network, in which a transaction between an entity **A** and an entity **B** of said network comprises the following steps:

a) the entity **A** sends to an Authorization Server S an authorization request (REQ) in which the entity **A** identifies and authenticates itself as the holder of an identifier ID$_A$;

b) the entity **A** declares to the Authorization Server S its intention to communicate with a certain entity **B;** the Authorization Server S determines a secret key $K_{SB}$ which it shares with this entity **B;** and

c) the Authorization Server S generates a session key $K_{AB, N}$ and sends it to the entity **A;**

said method being **characterized in that** said session key $K_{AB,N}$ is a one-way function of said secret key $K_{SB}$, and is also a function of an integer **N,** referred to as the transaction number, allocated to said transaction, and **in that** it further comprises the following steps:

d) the Authorization Server S also generates a transaction identifier *IDTR$_N$,* which is a function dependent at least on said transaction number **N** in a non-invertible manner;

e) the Authorization Server S supplies the entity **B** with elements comprising at least said transaction identifier *IDTR$_N$;* and

f) the entity *B* verifies at least that the value of the transaction identifier *IDTR$_N$* received during said step e) figures within a set of values precalculated by the entity *B* by means of an algorithm for modifying the transaction number and an initial transaction number which are shared with the Authorization Server *S*, and corresponding to at least one scheduled value of the transaction number; if such is the case, the entity $B$ deduces therefrom firstly the current value of the transaction number $N$, and subsequently the value of the session key $K_{AB, N}$.

2. Method for secure communications according to Claim 1, **characterized in that** said authorization request (REQ) comprises a request identifier $ID\text{-}REQ_M$, which is a function dependent at least, in a non-invertible manner, on an integer $M$, called the authorization number, assigned to this authorization request (REQ).

3. Method for secure communications according to Claim 2, **characterized in that**, during said step c), the Authorization Server $S$ sends furthermore to the entity $A$ an authorization identifier $IDAUT_M$ which is a function dependent at least, in a non-invertible manner, on said authorization number $M$.

4. Method for secure communications according to any one of Claims 1 to 3, **characterized in that** the integrity of all or some of said elements sent to the entity $B$ during said step e) is protected.

5. Method for secure communications according to Claim 4, **characterized in that** this integrity protection is achieved by means of said session key $K_{AB,N}$ or of a key derived from this session key $K_{AB, N}$.

6. Method for secure communications according to any one of Claims 1 to 5, **characterized in that** said elements which the Authorization Server S supplies to the entity $B$ during said step e) also comprise a piece of data $CHECK_{A, N}$ dependent on the transaction number $N$ and deducted, by means of a cryptographic function dependent on a secret key $K_{SB, check}$ derived from said secret key $K_{SB}$, from a set of elements obtained from said authorization request (REQ), and, optionally, from the transaction number $N$.

7. Method for secure communications according to any one of Claims 1 to 6, **characterized in that** the entity $A$ supplies the entity $B$ with said identifier $ID_A$ of the entity $A$, or a derived identifier $ID'_A$.

8. Method for secure communications according to Claim 6 and Claim 7, **characterized in that**:

   - said set of elements from which said piece of data $CHECK_{A,N}$ is deducted comprises the identifier $ID_A$ of the entity $A$ or said derived identifier $ID'_A$, and
   - during said step f), the entity $B$ verifies, by means of said secret key $K_{SB,N}$, the consistency between, on the one hand, the piece of data $CHECK_{A,N}$ received according to Claim 6, and, on the other hand, said elements comprising the identifier $ID_A$ or the derived identifier $ID'_A$ received according to Claim 7.

9. Device, referred to as an Authorization Server, to secure communications in a telecommunications network during a transaction between an entity $A$ and an entity $B$, comprising means for:

   - identifying and authenticating an entity $A$ holding an identifier $ID_A$,
   - determining a secret key $K_{SB}$ which said Authorization Server $S$ shares with an entity $B$ with which the entity $A$ declares its intention to communicate, and
   - generating a session key $K_{AB,N}$ and sending it to the entity $A$,

   **characterized in that**, said session key $K_{AB,N}$ being a one-way function of said secret key $K_{SB}$ and also being a function of an integer $N$, referred to as the transaction number, allocated to said transaction, it further comprises means for:

   - generating a transaction identifier $IDTR_N$, which is a function dependent at least on said transaction number $N$ in a non-invertible manner, and
   - supplying said entity $B$ with said transaction identifier $IDTR_N$.

10. Device, referred to as entity $B$, for secure communications in a telecommunications network, **characterized in that** it comprises means for, during a transaction involving said entity $B$ and an entity $A$:

   - receiving elements comprising a transaction identifier $IDTR_N$ generated by an Authorization Server $S$, said transaction identifier $IDTR_N$ being a function dependent at least, in a non-invertible manner, on an integer $N$, referred to as the transaction number, allocated to said transaction,
   - verifying that the value of the transaction identifier $IDTR_N$ received figures within a set of values precalculated by the entity $B$ by means of an algorithm for modifying said transaction number and an initial transaction number which are shared with the Authorization Server $S$, and corresponding to at least one scheduled value of the transaction number,
   - deducing therefrom the current value $N$ of the transaction number, and
   - deducing therefrom a session key $K_{AB,N}$ which is, on the one hand, a function of the transaction number $N$, and, on the other hand, a one-way function of a secret key $K_{SB}$ shared by the entity $B$ and said Authorization Server $S$.

**11.** Device, referred to as entity *A,* for secure communications in a telecommunications network, comprising means for, during a transaction involving said entity *A* and an entity *B*:

> - identifying itself and authenticating itself as the holder of an identifier $ID_A$ vis-à-vis an Authorization Server *S*,
> - declaring to said Authorization Server *S* its intention to communicate with a certain entity *B*, and
> - receiving a session key $K_{AB,N}$ from the Authorization Server *S*,

> **characterized in that**, said session key $K_{AB,N}$ being a one-way function of an secret key $K_{SB}$ shared by the Authorization Server *S* and the entity *B* and also being a function of an integer *N*, referred to as the transaction number, allocated to said transaction, it further comprises means for:

> - receiving a transaction identifier $IDTR_N$ from the Authorization Server *S*, which is a function dependent at least on said transaction number *N* in a non-invertible manner and
> - sending elements comprising at least said transaction identifier $IDTR_N$ to the entity *B*.

**12.** Device for secure communications in a telecommunications network, **characterized in that** it comprises means according to Claim 10 and according to Claim 11.

**13.** Data storage means which is non-removable, or partially or totally removable, comprising computer program code instructions for implementing said means comprised in a device for secure communications according to any one of Claims 9 to 12.

**14.** Computer program downloadable from a communication network and/or stored on a medium readable by computer and/or executable by a microprocessor, **characterized in that** it comprises instructions for implementing said means comprised in a device for secure communications according to any one of Claims 9 to 12.

Serveur
d'autorisation

Secret partagé
$K_{SA}$

Secret partagé
$K_{SB}$

MES

MES

AM

A

B

A'

B'

Entité
expéditrice

Entité
destinatrice

**FIG. 1**

Entité
expéditrice

Serveur
d'autorisation

Entité
destinatrice

A

S

B

MES

**Requête d'autorisation (REQ)**
$IDREQ_M$, {INFO}, [MAC1]

**Réponse d'autorisation (RESP)**
$IDAUT_M$, {INFO'}, $IDTR_N$, OP,
$[CHECK_{A,N}]$, [MAC2]

**Message authentifié (AM)**
$IDTR_N$, $[CHECK_{A,N}]$, MES,
[MAC3]

MES

Poursuite de l'échange avec la clé $K_{AB,N}$

**FIG. 2**

EP 2 484 084 B1

Entité
expéditrice

Serveur
d'autorisation

Entité
destinatrice

A

S

B

**MES**

**Requête d'autorisation (REQ)**
MES, $IDREQ_M$, {INFO}, [MAC1]

**Message authentifié (AM)**
$IDTR_N$, [$CHECK_{A,N}$], MES,
[MAC3]

**MES**

Accusé de réception

**Réponse d'autorisation (RESP)**
$IDAUT_M$, {INFO'}, OP, [MAC2]

Poursuite de l'échange avec la clé $K_{AB,N}$

**FIG. 3**

## RÉFÉRENCES CITÉES DANS LA DESCRIPTION

**Documents brevets cités dans la description**

- US 20050027985 A
- US 7024692 B
- WO 200891517 A
- WO 2007062672 A

**Littérature non-brevet citée dans la description**

- **C-C.A. HUANG.** Using Identity-Based Privacy-Protected Access Control Filter. Auburn University, 2007
- **D.R. KUHN et al.** *Security Considérations for Voice over IP Systems,* 2005